# EUROPEAN PATENT SPECIFICATION

(11) **EP 1 224 793 B1**
(45) Date of publication and mention of the grant of the patent: **27.04.2011**
(21) Application number: 97907995.1
(22) Date of filing: 28.02.1997
(51) Int. Cl.: H04M 3/00, H04M 3/48, G06F 17/30

(54) **METHOD AND APPARATUS FOR TELEPHONICALLY ACCESSING AND NAVIGATING THE INTERNET**
VERFAHREN UND GERÄT ZUM TELEPHONISCHEN ZUGRIFF UND NAVIGATION DURCH INTERNET
PROCEDE ET APPAREIL SERVANT A ACCEDER PAR TELEPHONE A INTERNET ET A NAVIGUER DANS CE DERNIER

(30) Priority: 01.03.1996 US 609699
(43) Date of publication of application: 24.07.2002
(73) Proprietor: Ben Franklin Patent Holding LLC, Bellvue, WA 98005 (US)
(72) Inventor: RHIE, Kyung, H., Los Altos, CA 94022 (US); KWAN, Richard, J., Fremont, CA 94539 (US); OLSEN, Lee, E., Boulder Creek, CA 95006 (US); HAHN, John, S., Los Altos, CA 94024 (US)
(74) Representative: Kazi, Ilya
(86) International application number: PCT/US1997/003329
(87) International publication number: WO 1997/032427

(56) References cited:
- DE-A- 4 436 175
- US-A- 4 716 583
- US-A- 5 265 033
- US-A- 5 265 033
- HEMPHILL C T AND THRIFT P R: "Surfing the WEB by Voice" PROCEEDINGS ACM MULTIMEDIA, XX, XX, November 1995 (1995-11), pages 215-222, XP002953305
- NIIMI M.: 'TNG/PhoneShell (Part 2) A proposal and an implementation of internet Access Method with Telephones and Facsimilies', May 1995, JICST 96A0053311 XP001106283
- GRONER: 'The telephone-the ultimate terminal' TELEPHONY June 1984, pages 34 - 40, XP002953362
- ARITA ET AL: ' The Voice Browser - An Archetype Based Dialog Model' NEC RES & DEVELOP. vol. 36, no. 4, October 1995, pages 554 - 561, XP002953304
- HEMPHILL C.T. AND THRIFT P.R.: 'Surfing the WEB by Voice' ACM MULTIMEDIA November 1995, pages 215 - 222, XP002953305
- CHRISTODOULAKIS S. ET AL: ' The Multimedia Object Presentation Manager of MINOS: A symmetric approach' SIGMOID vol. 15, no. 2, June 1986, pages 295 - 310, XP002953306
- ZUE, V.W.: 'Navigating the information superhighway using spoken language interfaces' IEEE EXPERT vol. 10, no. 5, October 1995, NEW YORK, USA, pages 39 - 43, XP002928595

## Description

### BACKGROUND OF THE INVENTION

### Field of the Invention

The present invention relates generally to methods for retrieving information from an interconnected network and for accessing and delivering the retrieved information to a user, and, more particularly, a method for accessing and retrieving information from an interconnected networks such as the internet via a telephone in response to the user's request and for delivering the information via voice, fax-on-demand, e-mail, and other means to the user.

### Description of the Prior Art

Under the conventional method of accessing information on an interconnected network such as the internet, the user is required to have a certain amount of computer software and hardware and is expected to have a certain level of computer expertise before the user can successfully access (or browse) a wide range of information now available on the internet. If the user does not have the necessary hardware and the appropriate software to direct the computer to establish a connection to the internet via a modem or a direct connection to the internet, the user would then have no other means available to him or her for accessing the internet.

Given the amount of information now readily available on the internet, having the ability to access the internet becomes a matter of convenience as well as a matter of having access to an invaluable information source.

Additionally, from a company or an organization point of view, it is advantageous to direct customers to a centralize information database and thereby necessitating the maintenance of only one database rather than multiple databases.

The software and hardware requirement for accessing the internet creates a barrier for most people to take advantages of this information source. Prior art systems overcome this problem by providing a telephone fax-on-demand system where a user uses a telephone to dial into a company's web page and directs the system to fax the web page back to the user. However, the manner in operating this type of system is tedious and time consuming. In order for the user to access a hyperlink on the web page, the first web page needs to be faxed back to the user with the hyperlinks numerically annotated for reference. The user then calls a second time (or wait for the first fax page to arrive on another line) to access subsequent web pages numerically using the now numbered hyperlinks.

DE 44 36 175 A describes a method enabling a user to remotely navigate through a particular data file and listen to the text of the particular file. Tags point to portions of text within the particular data file so that the user can navigate within the file, e.g. from a chapter, to a paragraph, to a sentence.

US 5 265 033 describes an electronic mail system for storing and receiving messages via ATM or POS terminals and enables messages to be retrieved remotely and sent to a facsimile machine, a paging device or a computer.

In an article by T. Hemphill et al entitled "surfing the Web by Voice" (ACM 0 - 89791 - 751 - 0 - 95/11) a system is disclosed enabling navigation of the World Wide Web using speech by speaking hypertext links that appear on a web page.

Thus a better system is needed to access and browse the internet in an inexpensive and efficient manner.

### SUMMARY OF THE INVENTION

It is therefore an object of the present invention to provide a method for accessing and browsing the internet through the use of a telephone.

It is another object of the present invention to provide a method for accessing and browsing the internet by converting the information content of a web page to voice format.

It is yet another object of the present invention to provide a method for signaling the user in an audio manner the hyperlink selections in a web page.

It is yet another object of the present invention to provide a method for accessing and browsing the internet where the information content of a web page may be provided to the user via voice format, fax-on-demand, e-mail, or regular mail.

Briefly, a method for accessing and browsing the internet through the use of a telephone and the associated DTMF signals is disclosed. The preferred embodiment of the present invention provides a system that converts the information content of a web page from text to speech (voice signals), signals the hyperlink selections of a web page in an audio manner, and allows selection of the hyperlinks through the use of DTMF signals as generated from a telephone keypad. Upon receiving a DTMF signal corresponding to a hyperlink, the corresponding web page is fetched and again delivered to the user via one of the available delivery methods.

An advantage of the present invention is that it provides a method for accessing and browsing the internet through the use of a telephone.

Another advantage of the present invention is that it provides a method for accessing and browsing the internet by converting the information content of a web page to voice format.

Yet another advantage of the present invention is that it provides a method for signaling the user in an audio manner the hyperlink selections in a web page.

Yet another advantage of the present invention is that it provides a method for accessing and browsing the internet where the information content of a web page may be provided to the user via voice format, fax-on-demand, e-mail, or regular mail.

These and other objects and advantages of the present invention will no doubt become obvious to those of ordinary skill in the art after having read the following illustrations and detailed description of the preferred embodiments.

According to a first embodiment of the invention there is provided a method for telephonically accessing and retrieving information from an interconnected network of computers, comprising the steps of: receiving a request, transmitted from a telephone, for accessing and retrieving information from an interconnected network of computers; the request comprising a signal corresponding to a first address corresponding to a first data file, accessible in said interconnected network of computers, fetching said first data file corresponding to said first address; wherein the fetched data file is in a first format and includes at least one selectable element associated with a second address of a second data file; converting said first data file in said first format to a voice format; delivering to the telephone said fetched first data file in said voice format; and delivering to the telephone an audio signal for signaling said at least one selectable element during said delivery of said first data file.

According to a second embodiment of the invention there is provided a system for telephonically accessing and retrieving information from an interconnected network of computers, comprising: means for receiving a request, transmitted from a telephone, for accessing and retrieving information from an interconnected network of computers; the request comprising a signal corresponding to a first address of a first data files accessible in said interconnected network of computers, means for fetching a first data file corresponding to said first address wherein the first data file is in a format and includes at least one selectable element associated with a second address of a second data file; means for converting said first data file in said first format to a voice format; and means for delivering to a telephone said first data file in said voice audio format; and an audio signal for signaling and said at least one selectable element during said delivery of said first data file.

### IN THE DRAWINGS

Fig. 1 illustrates the components of the preferred embodiment of the present invention;
Fig. 2 shows the subsystems for the voice browser of the present invention;
Fig. 3 illustrates the subsystems of the HTree Generator/Web browser;
Fig. 4 shows the components of the Voice Data Management System; and
Fig. 5 illustrates the components of the fax data management system.

### DETAILED DESCRIPTION OF THE PREFERRED EMBODIMENT

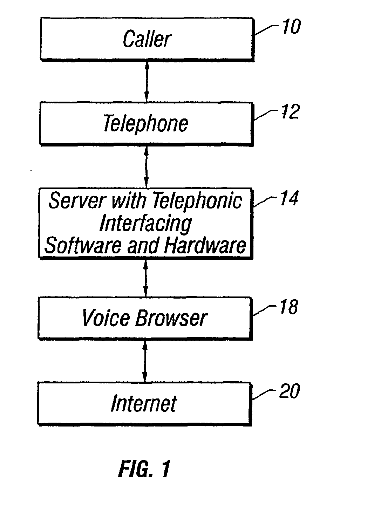

Referring to Fig. 1, the preferred embodiment of the present invention is operated by a caller 10 using a telephone 12 to dial into a server having telephonic interfacing software and hardware. The server provides audio directions to the caller and provides a number of options which may be selected by the corresponding DTMF tones generated through the use of a telephone keypad. By pressing a number on the keypad corresponding to the desired option, the caller selects one of the several available options. The server then receives the DTMF tone, converts the tone to a corresponding DTMF code, identifies the option corresponding to the code, and executes the action corresponding to the selected option. In this manner, the caller is able to direct the server to take certain available actions.

One of the available actions is to direct a voice browser 18 to navigate the internet 20. By selecting the voice browser, the caller is provided with an audio readback of a default web page where the available links to other web pages are read back to the user and are indicated by a special audio signal such as a short duration tone signal, a beep, a "bong" sound, etc.

For example, referring to Appendix D illustrating a listing of the code of the preferred embodiment as described below, instructions (starting from page 13 of Appendix D) are provided to direct a user to navigate through available documents and the hyperlinks therein. By repetitively selecting documents and the hyperlinks contained therein, the user can navigate the entire internet.

### User Interface for Operating the Voice Web

To operate the preferred embodiment of the present invention, a touch-tone phone and the phone number to access a server are all that is required.

The voice browser provides a series of audio menus to guide the caller to retrieve documents or web pages from the internet. Several options are provided at each menu and the caller may make a selection by pressing the corresponding key(s) on the telephone. The opening menu may request a password before allowing the caller to access the system.

For inputs requiring specific spelling of the information being entered (e.g. e-mail address, name, street address, etc.), each character can be defined by pressing a two-key combination. The first key indicates the key where the letter appears, and the second key indicates the position it occurs on that key. For example, the letter "A" is defined as 21, "B" is defined as 22, "C" is defined as 23, "D" is defined as 31, etc. However, the letters "Q" and "Z" are not defined on a telephone keypad and they may be assigned by special two-key combinations. In the preferred embodiment, the letter "Q" is defined as 17 and the letter "Z" is defined as 19. Other special characters may be assigned as well. For example the "@" sign is defined as 12, the "_" character is defined as 18, the "." (period) is defined as 13, and a " " (space) is defined as 11.

The actual interface between the voice browser and the telephony interfacing hardware is expected to vary according to the implementation. There are two issues involved here. One issue involves interface control, namely how the software commands are accepted by the interface and how errors or exceptions are signaled. The other issue involves audio encoding -- how audio (e.g. voice) data is represented at the interface. For example, the Rockwell chip set utilizes a Hayes-compatible command set which is extended for fax and voice operations, and where audio data is encoded in the Adaptive Differential Pulse Coded Modulation (ADPCM) format. Under a Unix system, ioctl() commands may be used to manipulate the audio interface. There may be another protocol for ISDN lines as well.

### Voice Web

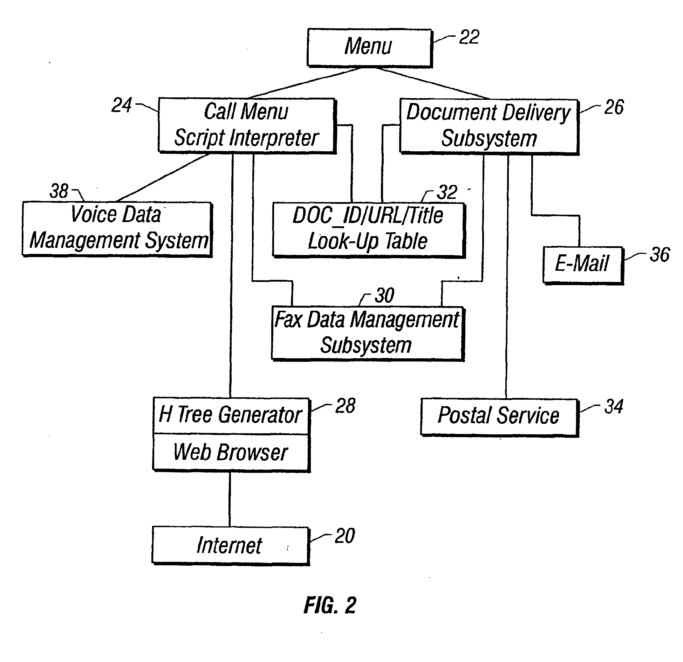

Referring to Fig. 2, the voice browser is software driven and is composed of several cooperating subsystems. From the main engine 22, depending on the selection made or the scheduling algorithm, either the Call Menu Script Interpreter 24 of the document delivery subsystem 26 may be activated.

The Call Menu Script Interpreter (CMSI) guides a caller through a series of call menus and plays voice segments of retrieved web pages or documents to the caller. It responds to the caller's touch tone selection and drives the HTree Generator/Web Browser 28. The task is accomplished by first directing the web browser to retrieve the desired web page(s) from the internet. The HTree Generator then converts the retrieved web page into an HTree which is a data structure storing web page data in a particular format conducive for conversion into voice format. The CMSI then traverses the HTree, sending HTree segments to the Voice Data management Subsystem (Voice DMS) 38. The Voice DMS contains pre-recorded texts or text-strings. For the texts or text-strings not in the Voice DMS, a text-to-speech engine is provided to convert the text to speech. The information content of the web page is then delivered to caller in the voice format. Optionally, the web page can also be delivered to the caller in other available methods, or it can be marked as a document request job for later processing. If the caller is calling from a phone line connected to a fax machine, the web page can be immediately delivered to the caller via the fax machine.

The web browser 28 of the preferred embodiment is a general web browser modified to interface with the HTree Generator and to access the internet 20. The web page or documents that may be readily accessed by the caller are indexed by document-ID, title, or Universal Resource Locator (URL) and stored in a database.

The document delivery subsystem 26 responds to the several available methods for delivering the web page to the caller. These methods include delivery via fax, electronic mail, and regular postal mail. The document delivery subsystem 26 also may directly retrieve a web page as selected by a caller and deliver the information to the caller via one of the available delivery methods.

In the case delivery by fax, the documents may be directly retrieved by a Fax Data Management Subsystem (Fax DMS) where the web pages in the HTML format may be converted to the PostScript format and then from the PostScript format to TIFF image format.

In the case delivery by e-mail, documents may be directly retrieved by an E-Mail Data Management Subsystem where web pages in the HTML format may be converted to straight ASCII text or to the PostScript format.

### Call Menu Script Interpreter

The Call Menu Script Interpreter (CMSI) guides the caller through a series of call menus via voice prompts and plays voice segments of a retrieved web page to the caller. The caller interacts with the CMSI by generating DTMF tones from the caller's touch-tone keypad. The DTMF tones are converted into ASCII text usually by the telephony interface hardware. In one embodiment, the conversion from DTMF tones to ASCII text is performed by a voice modem.

In order to carry out all of the tasks, the CMSI is implemented utilizing a set of software registers and instructions. A software register may be readable, writable, markable, or nav-writable where a nav-writable register allows the navigational mechanism of the browser to write to it. Registers which can be written by the DTMF-converted ASCII text are referred to as "caller-writable registers." These registers include the DocID, FaxNum, ExtNum, ExtName, Passwd, Userid, and Selection registers. Registers for which the ASCII text can be converted into voice are termed "caller-readable registers". These registers include the DocId, FaxNum. ExtNum. ExtName, and Title registers. Markable registers include the DocId and URL registers. The nav-writable registers include the DocId, URL, Title, MarkedNumDoc, MaxNumDoc, and MaxRepeatInput registers.

There is also an instruction set associated with the registers. There are four basic categories of instructions: Execution Control instruction, Caller Register instructions. Audio Output instructions, and Miscellaneous instructions. Some of the more basic instructions are the Play instruction which plays the content of a register, a prompt, or a web page; the Get instruction which gets the DTMF input into a register: the Mark instruction which marks a page or document according to a URL or DocId; the Goto instruction which unconditionally jumps to a different location in the script; and the Selection instruction which jumps if a given register matches a given DTMF string. Appendix A attached herein explains each of the registers and instructions. The preferred embodiment is not limited to the listed registers and instructions in Appendix A. New instructions and/or registers can be readily added to accommodate new features or functionalities.

As the caller navigates through the web, an URL list is kept. A maximum size limit is imposed on the URL list where a First-In-First-Out system is maintained. Additionally, each of the URL entry in the URL list may have an associated HTree. There is an HTree cache for all the HTree entries. For the HTree cache, if there is a limitation in size, the least recently used entries is deleted first.

### HTree Generator / Web Browser

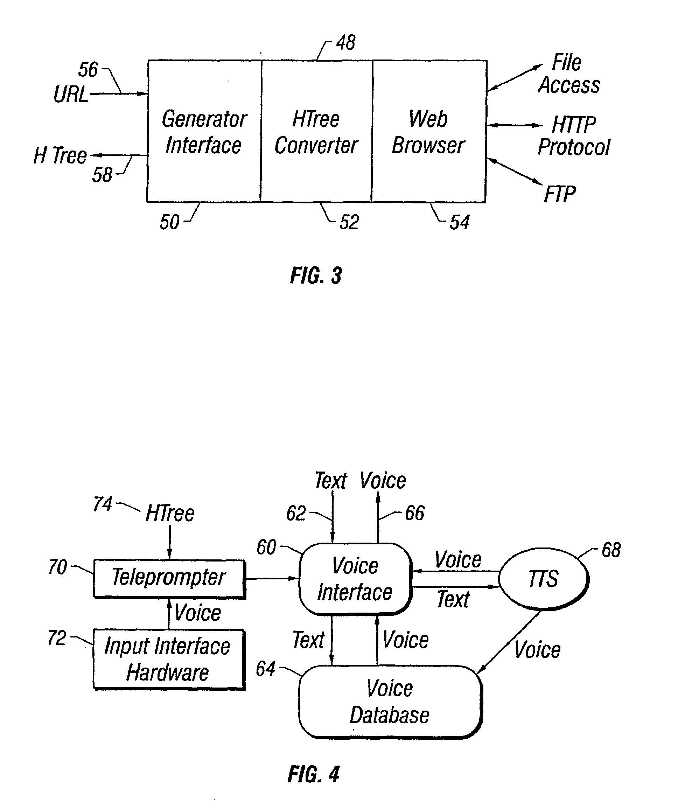

The HTree Generator/Web Browser (hereinafter "HTree Generator") is the Voice Browser's agent for accessing the World-Wide-Web. It is similar to a GUI-based web browser except that the user interface is replaced by an audio interface residing within the CMSI. The HTree Generator is driven by the CMSI. Referring to Fig. 3, the HTree Generator 28 is generally comprised of a generator interface component 50, an HTree Converter 52, and a web browser 54. The CMSI sends a URL 56 to the HTree Generator 28. The generator interface 50 receives the URL and sends the URL to the web browser 54 to retrieve the web page or document via one of the several available methods (e.g. FTP and HTTP). The HTree Converter 52 converts the retrieved web page/document into an HTree, and the HTree is sent to the CMSI. Thus, regardless of the format of the retrieve document, it can be converted into HTree format for processing.

At its highest level, an HTree contains a series of HTree sentences. An HTree sentence can comprise several HTree segments which when strung together forms a complete sentence in the language of choice including English and Spanish. The top level structure, represented by the symbol HTree, represents a given web page where the structure may include the URL of the page, its title, and it may include a number of linked lists. Appendix B attached herein provides a full explanation of the HTree structure.

### Voice Data Management Subsystem

The Voice Data Management Subsystem (Voice DMS) provides audio segments to the CMSI for the given text segments. Referring to Fig. 4, the main interface between the Voice DMS and the CMSI is the voice interface 60. The voice interface 60 receives a text string from the CMSI and passes it to the Voice database 64 to retrieve the corresponding digitally encoded voice pattern. The voice interface 60 then returns the encoded voice pattern 66 to the CMSI. If the voice interface does not find the text string in the Voice database, it will send the text string to the Text-To-Speech subsystem 68 to generate the digitally encoded voice pattern for that text string. The generated voice pattern is passed to the voice interface to pass to the CMSI. Whenever the Text-To-Speech subsystem generates a voice pattern for a text string, the text string and the generated voice pattern is passed to the Voice database and stored for future reference.

Some of the voice interface's functions for driving the application program interface (API) include voiceopen, voiceget and voiceclose. The voiceopen function creates a voice handle for a given URL that enables the CMSI to keep track of the data during a session. The voiceget operation uses the voice handle to retrieve a voice pattern. The voiceclose function simply closes the interface associated with a voice handle.

Commonly used text strings may be recorded with human voice. A method of inputting text strings and associated human voice into the voice database involves the using of a voice teleprompter 70 and input interface hardware 72. Some of the capabilities that the teleprompter include Play, Start, Stop, and Record. The voice teleprompter 70 receives an HTree as input 74 and displays HTree segments on the teleprompter 70. A person whose voice is being recorded would read the text strings as displayed by the teleprompter 70 and use the input interface hardware 72 to input his or her voice. Once the recording is satisfactory, the teleprompter sends the recording along with the text string to the voice interface 60 for storage into the voice database 64.

### Document Delivery Subsystem

The Document Delivery Subsystem provides a method for the caller to request a document or a web page to be delivered via one of the available delivery methods such as delivery via fax, via e-mail, or via regular postal service.

In delivering a document or web page via e-mail, the document or web page may be formatted for ASCII, a selected word processing program format, or another available format. In delivering a document or web page via regular postal mail, the system will ask for the caller's name and address if it is not already in a caller information database.

In delivering a document or web page via fax, once the TIFF files for all the requested documents have been retrieved or received, they files are concatenated into one file and queued for transmission. The fax can be sent to the caller right away if the caller has another phone line connected to a fax machine.

The document delivery subsystem operates like a queue where the queue is periodically check to see if there are any pending jobs. If there is a pending job, a scheduling file that contains the time for delivery, the method of delivery, and the file for delivery for each job is checked. If the transmission attempt is unsuccessful, the job will be rescheduled for transmission at a later time. There is a limit on the number of retries before the system administrator is notified. Appendix C attached herein provides the specific details for the document delivery subsystem.

### Fax Data Management Subsystem

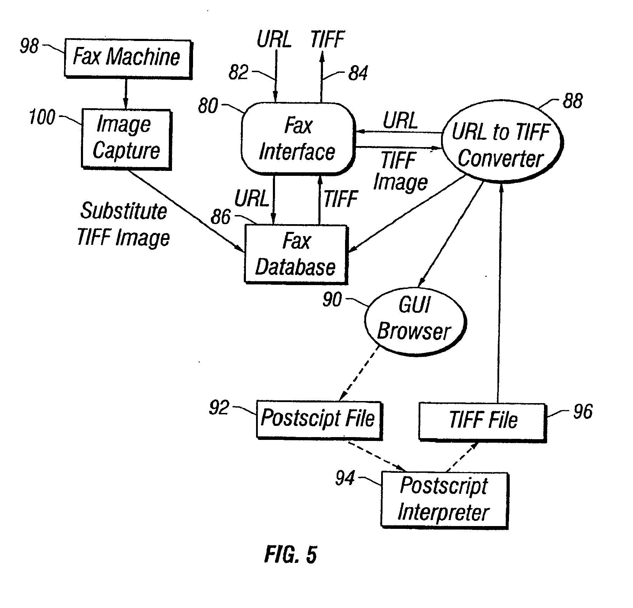

The Fax Data Management Subsystem (Fax DMS) interacts with the CMSI and Document Delivery Subsystem through an interface called the fax interface. Referring to Fig. 5, the fax interface 80 receives an URL 82 and returns a TIFF formatted file 84. The fax interface 80 searches the Fax database 86 for the corresponding TIFF file for the given URL. If a TIFF file is found, the fax interface retrieves the file and returns it to the requesting subsystem. If the requested file is not found in the Fax database, the fax interface sends the URL to a URL-To-TIFF convertor 88. The TIFF converter invokes a GUI browser 90 to retrieve the web page or document if it has not already been retrieved and uses the browser to convert the web page or document into a PostScript formatted file 92. The PostScript formatted file is then passed to a PostScript interpreter 94 which creates a TIFF file 96 from the PostScript file. The TIFF file is then passed back to the fax interface 80 and/or a fax database 86. Fax images can also be directly imported into the fax database through the use of a fax machine which creates an image capture file 100 for import into the fax database. The image capture file 100 ensures the quality of an image and may compare favorably against TIFF formatted images.

Although the present invention has been described in terms of the presently preferred embodiment, it is to be understood that such disclosure is not to be interpreted as limiting. Various alterations and modifications will no doubt become apparent to those skilled in the art after reading the above disclosure. Accordingly, it is intended that the appended claims be interpreted as covering all alterations and modifications as fall within the scope of the invention.

### Appendix A: Call Menu Script Interpreter- Instruction Set

The Web-On-Call™ Call Menu Script Interpreter uses several registers.

### A.1. Menu Registers

The table below describes each of the CMSI registers. The *Register Name* is the name of the register as defined in the code. The *Type* is the format of the field. The *creg-R*/*W*/*M* column denotes if the register is readable, writable, or markable by the Call Menu Script Interpreter. The *nav-W* column denotes whether the register can be written to by the navigation mechanisms of the browser.

**Table 1: Menu Registers**

| **Register Name** | **Type** | **creg-R/W/M** | **nav-W** | **Description** |
|---|---|---|---|---|
| DocID | string | R/W/M | W | The document no. entered by the caller |
| FaxNum | string | R/W | - | The fax number of the caller |
| ExtNum | string | R/W | - | The extension number for the fax cover sheet |
| FaxName | string | R/W | - | The name for the fax cover sheet |
| Lang | string | - | - | The language selected for the prompts |
| Url | string | M | W | The current top of the URL stack |
| Title | string | R | W | The title of the page of the current URL |
| AltUrl | string | | W | An optional alternate URL |
| AltTitle | string | R | W | The title of the alternate URL page |
| Passwd | string | W | - | The password of the caller |
| Userid | string | W | - | The userid of the caller |
| Selection | string | W | - | Input and conditional test variable |
| QuickSelection | string | W | | |
| MarkedNumDoc | int | - | W | Number of documents marked for delivery |
| MaxNumDoc | int | - | W | Maximum number of deliverable |
| MaxRepeatInput | int | - | W | documents Maximum DTMF input retries |

### A.2. Instruction Set

The Call Menu Script language has four basic categories of instructions: Execution Control instructions, Caller Register instructions, Audio Output instructions, and Miscellaneous instructions.

In the description of the instruction set, the following variable definitions are used:

**Table 2: Instruction Set Variable Definitions**

| | |
|---|---|
| *creg-r* | caller-readable register named *"creg-r"* |
| *creg-w* | caller-writable register named *"creg-w"* |
| *creg-m* | caller-markable register named *"creg-m"* |
| *card* | a cardinal number (non-negative number) |
| *pfile* | name of a prompt file |
| *url* | URL of a file |
| *label* | label name; target of a GOTO |
| *ic* | interpreter counter |

### A.2.1 Execution Control Instructions

**LABEL** *label*
   Symbolic name for script location.
**GOTO** *label*
   Continue execution at *label.*
**EXIT**
   Terminate script execution.
**NO_INPUT_GOTO** *label*
   **If DTMF** input is empty, continue execution *label.*

### A.2.2 Caller Register Instructions

**PLAY** *creg-r*
   Fetch voice segment for *creg-r* and play to telephony interface.
**GET_PREVIOUS_PAGE**
   Pop the current top of the URL stack, so that the previous entry becomes the current value of the URL register.
**COMMIT_KEY** *key*
   Cause the caller input string to be committed when *key* is received.
**GET** *creg-w card*
**GET** *creg-w creg-r*
   In the first case, copy current DTMF string input to register *creg-w.* The string is up to length *card* characters, or is terminated by a commit key
   In the second case, copy register *creg-r* to register *creg-w.* For example, GET Selection ExtNum would copy ExtNum to Selection, and allow later use of Selection in testing the value.
**RESET** *creg-w*
   Reset value of *creg-w* to nil.

### A.2.3. Audio Output Instructions

**PLAY** *creg-r*
   See above description in "Caller Register Instructions."
**PLAY PROMPT** *pfile*
   Fetch encoded voice for *pfile* and play to telephony interface.
**PLAY PAGE**
   Fetch encoded voice for file corresponding to "url" and play to audio channel
**PLAY DOC**
   Fetch voice segments for page corresponding to register "Url" and play to telephony interface. In the case of PLAY DOC, first convert value in register "DocID" to corresponding URL, and place in register "Url".
   If a segment has an associated hypertext link, precede the voice segment by an audio "bong." If PLAY is interrupted, register "Url" gets the value of the hypertext link.
**PLAY PAGE_CONTENT_ONLY**
   Fetch voice segments for page corresponding to register "Url" and play to telephony interface. Do not indicate hypertext links.
**PLAY CATALOG**
   Fetch voice segment for file corresponding to catalog and play to telephony interface.
**PLAY QUICK**
   Play the Quick Navigation list for the page corresponding to register "Url."
   This command plays a list of links which are accessible from the current page. For each link, it generates a voice segment saying "for title, press number", where "title" is the title of the document corresponding to the URL on the link, and "number" is the two-digit number the caller can press.

### A.2.4. Miscellaneous Instructions

**CHECK_AVAIL_OK** *label*
   If all marked documents are currently available, then go to *label.*
**CHECK_PASSWD_OK** *label*
   If "Passwd" is confirmed for "Userid", then go to "label", change "ie" accordingly.
**CHECK_USER_ID_OK** *label*
   If "Userid" is a valid entry, then go to "label"; change "ie" accordingly.
**COUNT_PASSWORD_INPUT_RETRY** *label*
   The password retry limit is set in the configuration file. If the number of attempts at password entry exceeds this password retry limit, then go to *label.*
**COUNT_USER_ID_INPUT_RETRY** *label*
   The userid retry limit is set in the configuration file. If the number of attempts at userid entry exceeds this userid retry limit, then go to *label.*
**POP_PAGE**
   Pop the current top of the URL stack, so that the previous entry becomes the current value of register "Url".
**MARK** *creg-m*
**MARK CATALOG**
   Put the page indicated by register creg-m (or in the latter case, the document catalog) on the list of deliverable documents and increment "MarkedNumDoc".
**MARK_DOCID**
   Put the page indicated by "Docid" on the list of deliverable documents and increment "MarkedNumDoc".
**MARK_HTML_PAGE**
   Put the page indicated by the "Url" on the list of deliverable documents and increment "MarkedNumDoc".
**MARK_QUICK_PAGE**
   Put the page indicated by the "Url" on the list of deliverable documents (This instruction is now obsolete).
**MAX_NUM_DOC** *card*
   Set maximum number of documents deliverable to *card.*
   (Note: *card* should be less than the system defined maximum number of documents. If **MAX_NUM_DOC** is not executed, the system will use the system-defined default.)
**MAX_REPEAT_INPUT** *card*
   Set maximum number of repeated DTMF inputs to *card.*
   **If MAX_REPEAT_INPUT** is not executed, the system will use the system-defined default.
**PLAY_HTML_CONTENT_ONLY**
   Play the content of the page corresponding to "Url".
**PUT_EXTENSION**
   Use "ExtNum" with the current list of deliverable documents.
**PUT_NAME**
   Use "ExtName" with the current list of deliverable documents.
**PUT** *creg-w*
   Write contents of *creg-w* onto the cover page of the deliverable documents. This is used for writing information such as extension number, extension name, etc.
**QUICK_SELECTION** *key label*
   If "QuickSelection" equals *key,* then go to *label.*
**RESET_QUICK_SELECTION**
   Reset the value of the "QuickSelection" register to Null pointer.
**RESET_SELECTION**
   Reset the value of the "Selection" register to Null pointer.
**SELECTION** *key label*
   If register "Selection" equals *key,* then go to *label.*
**SEND** *deliv-method*
   Fetch requested documents in the format required by deliv-method, and immediately deliver them.
   Currently, *deliv-method* can only be set to FAX. This fetches the TIFF images of the requested documents, and transmits them to the telephony interface.
**SET_LANGUAGE** *lang*
   Set the language used for voice prompts to "lang".
**QUEUE** *deliv-method*
   Enqueue the current list of requested documents for delivery by *deliv-method.*
   The list of available *deliv-method* values is implementation defined. Typical values include: FAX, USMAIL, EMAIL.
**TRANSFER_OPERATOR** *phonenumber*
   Transfer the caller to the phone number indicated by *phonenumber.*
**VERIFY_DOCID_OK** *label*
   If the page corresponding to "DocID" is valid, then go to "label".
**VERIFY_MAX_OK** *label*
   If "MarkedNumDoc" is less than "MaxNumDoc", then go to "label".
**VERIFY_QUICK_SELECTION_OK** *label*
   If the value of "QuickSelection" is valid, then go to "label".
**VERIFY** *creg-w label*
**VERIFY** *nav-w label*
   If the value in register *creg-w* is valid, go to *label.* The verification mechanism is implementation dependent. (This is useful in Userid/Passwd verification.)
   For VERIFY MarkedNumDoc, confirm that "MarkedNumDoc" < "MaxNumDoc".

### Appendix B: HTree Structure

The Web Browser receives information in the form of a URL from the Voice Navigator and generates an H-Tree based on the text from the corresponding web page.

The H-Tree contains at its highest level a series of H-Tree sentences. An H-Tree sentence can comprise several H-Tree segments, which, when strung together, will form a complete sentence in the English or Spanish language.

An H-Tree is a collection of data structures for communicating between a H-Tree web browser and a program which operates on voice segments.

The top level structure, _HTree, represents a given web page. It includes the URL of the page and its title. It also includes a number of linked lists. These handle:
- H-Tree sentences -- pseudo-sentences which are extracted from the web pages.
- HRef anchors -- hyperlinks which refer to off-page web content.
- Name anchors -- hyperlinks referring to points in the current web page.

An H-Tree sentence, represented by the structure _HTreeSent, is an ordered sequence of voice segments. When a program (e.g., the voice navigator) breaks its audio playback and is required to restart, it normally plays from the beginning of the current H-Tree sentence.

Voice segments are represented by H-Tree segments. Separate H-Tree segments are generated for each piece of text which has an anchor associated with it. (This corresponds to the common practice of underlined or highlighted text in a GUI-based web browser browser.)

H-Tree segments may also be defined to isolate relatively stable text from text which is frequently updated. For example, the text:
Stock NPCI is selling at $25 1/4
might be broken into the segments

| | |
|---|---|
| Stock | (stable) |
| NPCI | (heavy update) |
| is selling at | (stable) |
| $25 1/4 | (heavy update) |

This would be accomplished by HTML tags at the appropriate points in an HTML file. This sequence of H-Tree segments would define an H-Tree sentence.

An H-Tree has a segment of text, and a potentially non-zero HRef number pointing into the HRef anchor list for the H-Tree sentence.

The HRef and Name anchor lists are both lists of H-Tree anchors. Each anchor has a URL and a title associated with the URL. The title may be either the text associted with the URL in the current web page, or the actual document title associated with the URL, as found in a URL-title table.

In its simplest form, an H-Tree sentence would correspond to a header, paragraph, or list item in an HTML file. Rules can be programmed into the H-Tree web browser to provide different, or finer divisions. Thus, instead of recognizing paragrahs as H-Tree sentences, it might be possible to recognize English sentences as H-Tree sentences. (Not that changing the language of the text might change the H-Tree sentence recognition rules.)

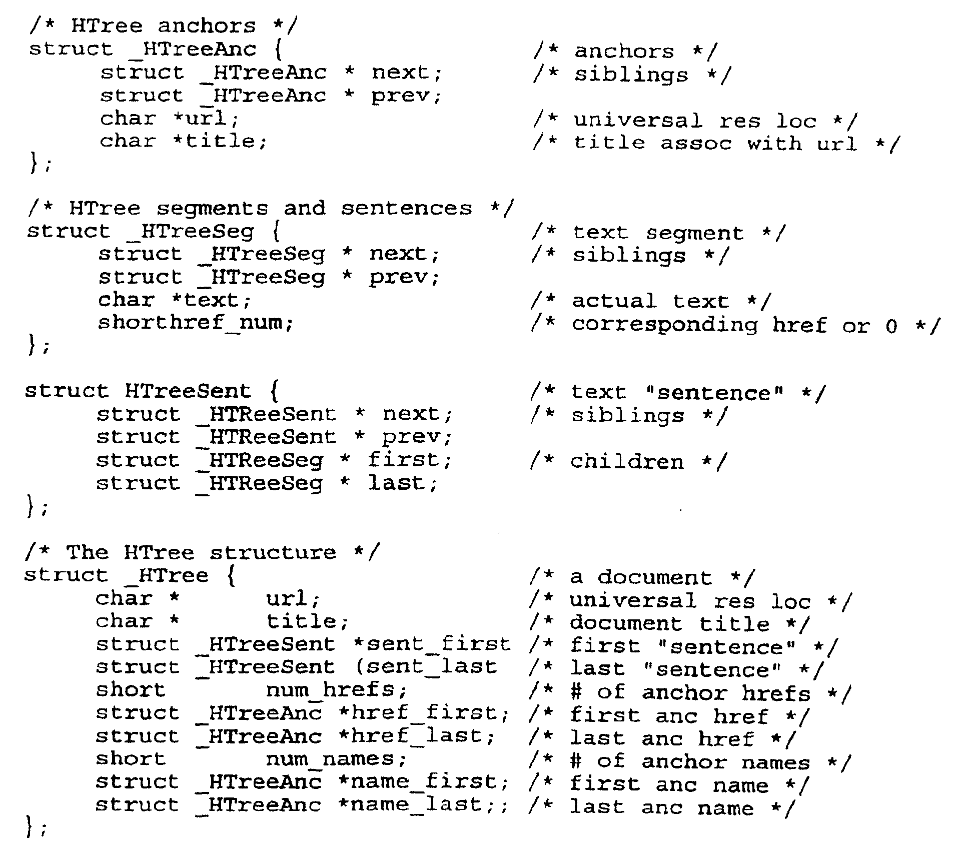

### Appendix C: Document Request Job

A Document Request Job specifics documents to be delivered to a requesting party, and how delivery should take place. It is generated by the Call Menu Script Interpreter and operated on by the Document Delivery Sub-system.

### C.I. Job Structure

The basic structure looks as follows:

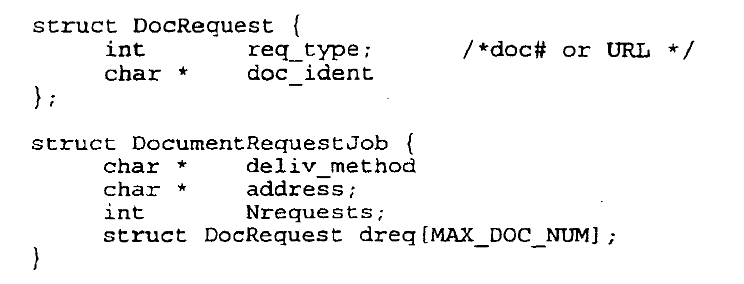

Within the DocumentRequestJob structure,
deliv_method indicates the delivery method.
address is a delivery address known to the delivery method
Nrequests is the number of documents requested (used as a maximum index for dreq).
dreq is an array of DocRequest structure, each indicating how a caller identified the document (req_type) and the identification itself (doc_ident).

The table below shows the correspondence between deliv_method and address

**Table 3:**

| deliv_method | address |
|---|---|
| fax two-call | fax number |
| fax one-call | empty |
| email | email address |
| postal service | Voice recording or prestored postal address |
| express courier | Voice recording or prestored postal address |

For each DocRequest, if the requested document is identified in doc_ident by DocID, then the Document Delivery sub-system will convert the document number into the corresponding URL for subsequent retrieval of the document in the format requested by the caller.

### C.2 Example

This example shows a request of documents to be delivered by fax two-call.

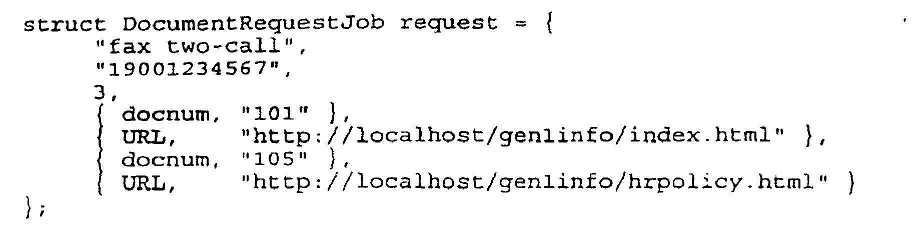

### APPENDIX D

Psudo-code of the described preferred embodiment.

README - gives some minor help in deciphering the pseudocode.
main.cc - initializes Web-On-Call, then sends it on its way.
WOC.cc - top-level routine; this is actually the "main engine" mentioned in chapter 2 of functional design spec.
CMSI.cc - Call Menu Script Interpretor. This is an stripped down model which illustrates some of the instructions of the interpretor.
VoiceDMS.cc - Voice Data Management Subsystem; pretty solid.
FaxDMS.cc - Fax Data Management Subsystem; pretty solid.
menu.small - sample script used by Call Menu Script Interpretor.
X-Sun-Data-Type: readme-file
X-Sun-Data-Description: readme-file
X-Sun-Data-Name: README
X-Sun-Charset: us-ascii
X-Sun-Content-Lines: 21
================================
README for Web-On-Call pseudocode
================================
revision: @ (#) README 1.1 96/02/10 NetPhonic

This code provides a conceptual model of what is or should be going on in the Web-On-Call product. No code from the real product is reproduced here. However, it is crafted as compilable C++ code. This helps in:
* clarifying the essential objects of the product
* ensuring that the represented algorithms have a semblance of reality to them

Pure pseudo-code, with no executable content is bracketed as conditional source, e.g.,
#ifdef pseudocode
unexecutable pseudo-code goes here
#endif // pseudocode

Sometimes, there will be an "else" clause with "stub" code. This allows the overall model to compile and run, in spite of the lack of complete code. For example,

### Appendix D - Page 1

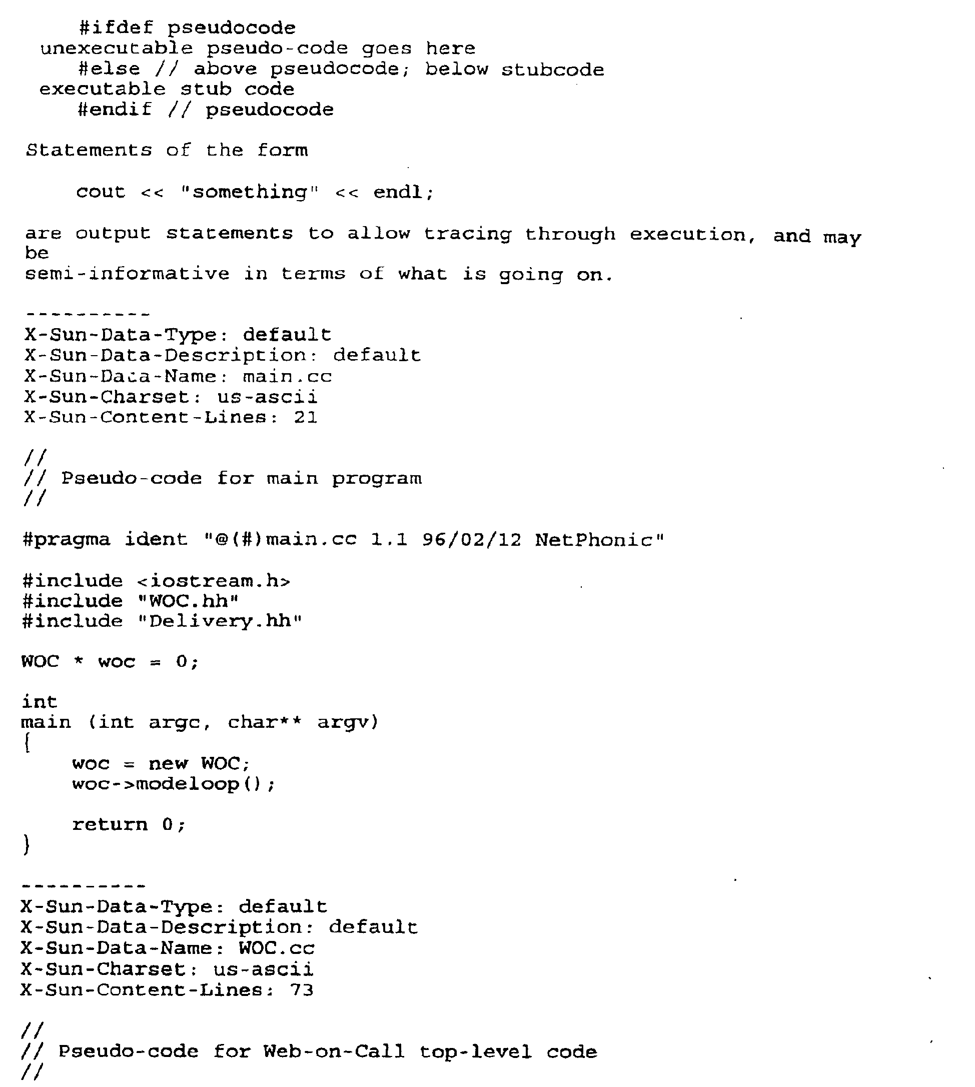

### Appendix D - Page 2

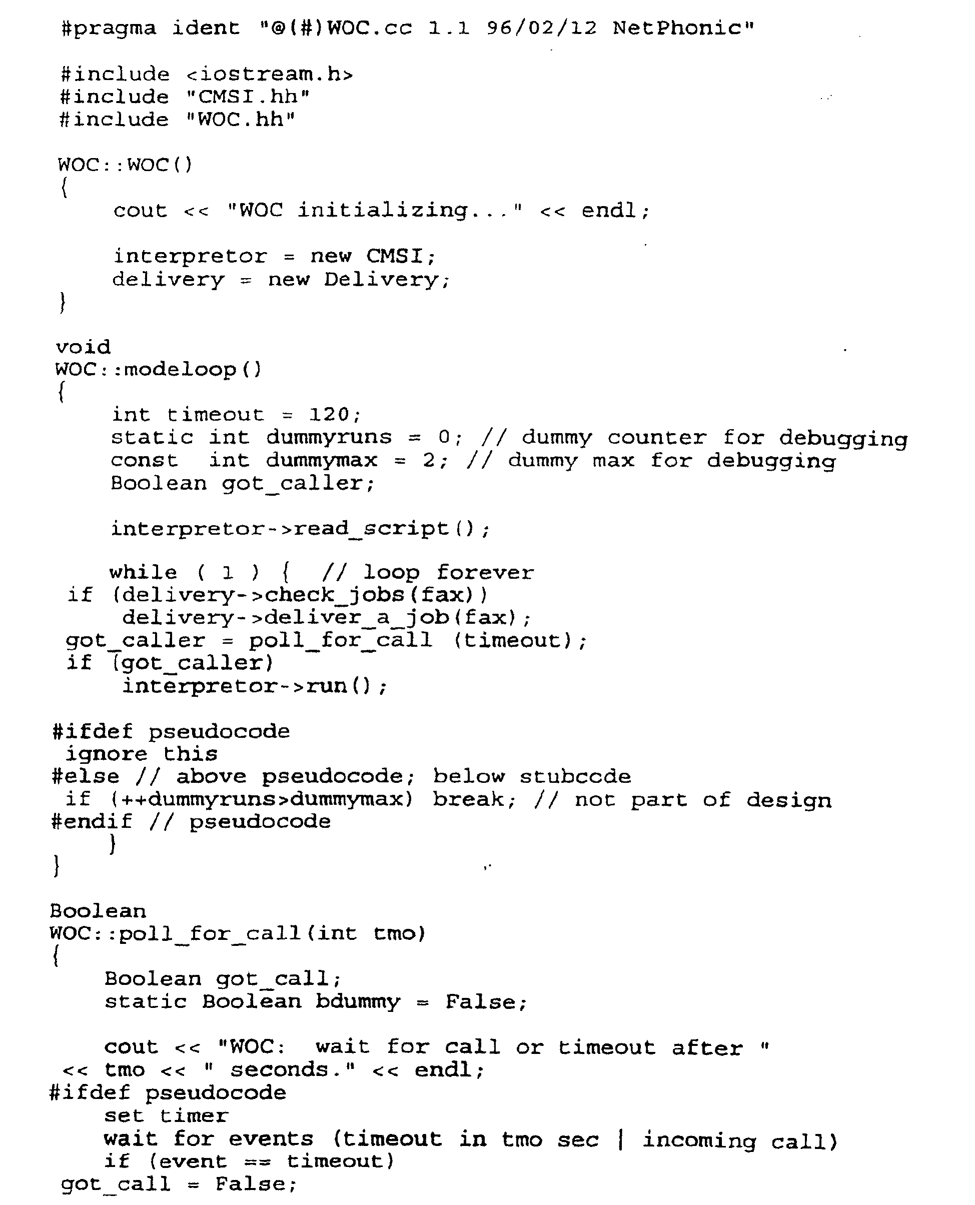

### Appendix D - Page 3

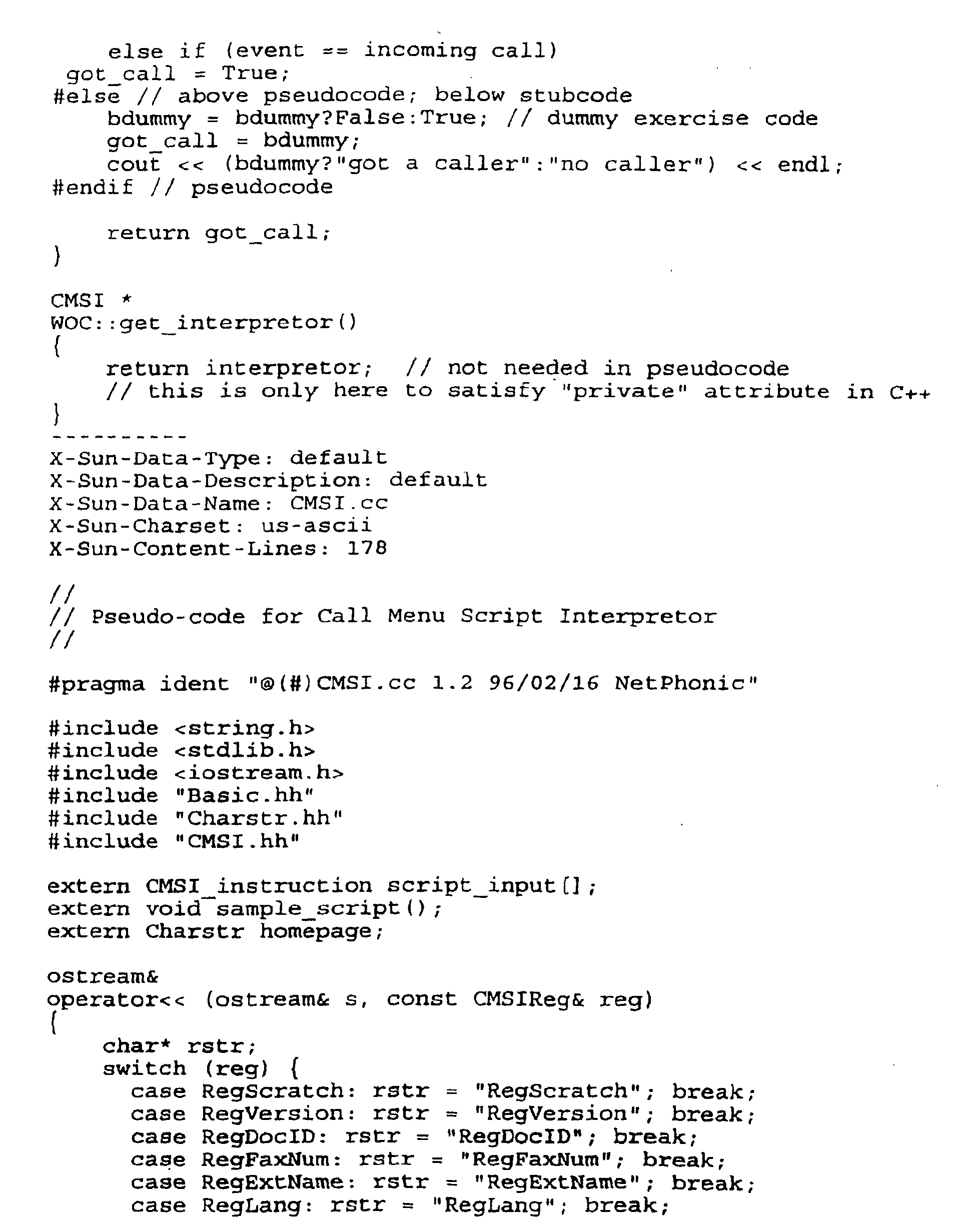

### Appendix D - Page 4

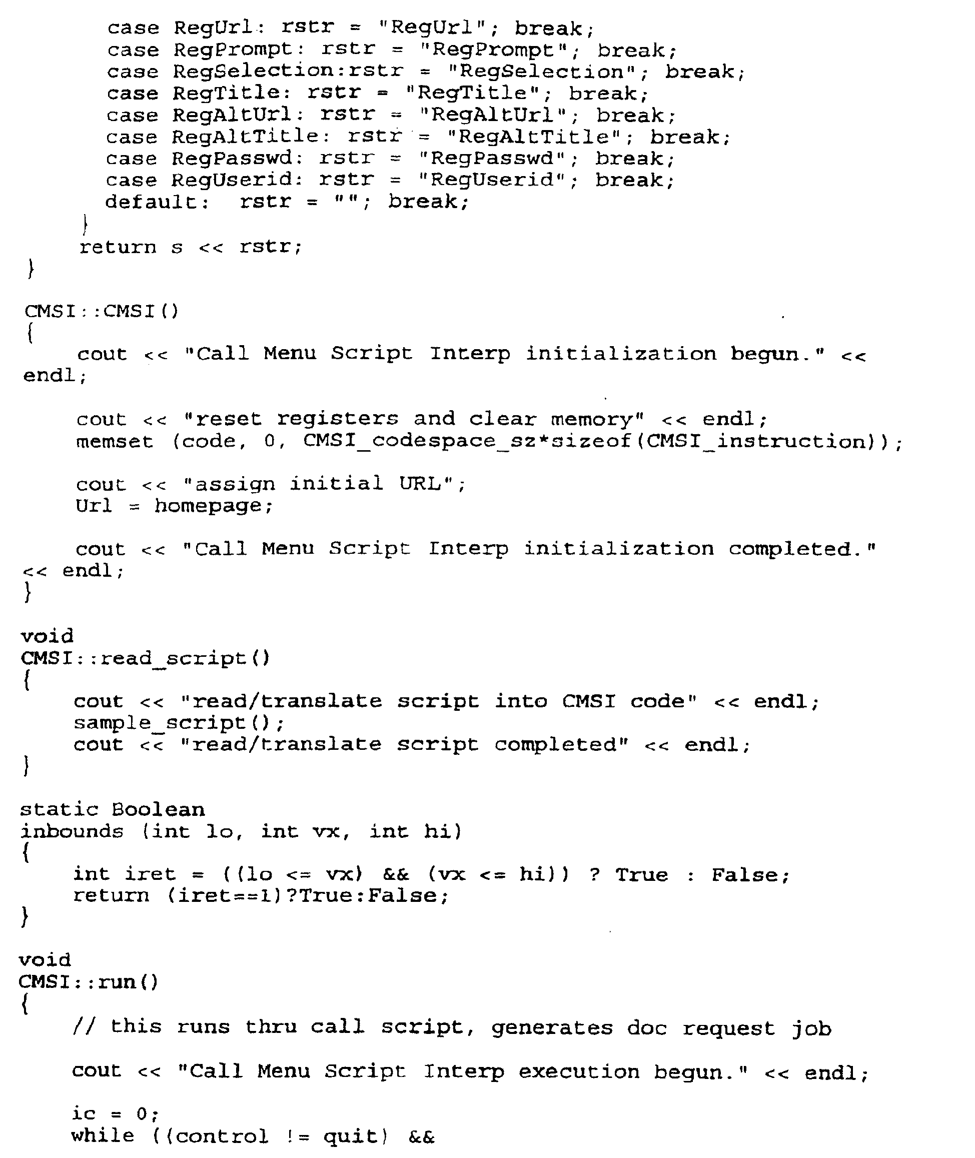

### Appendix D - Page 5

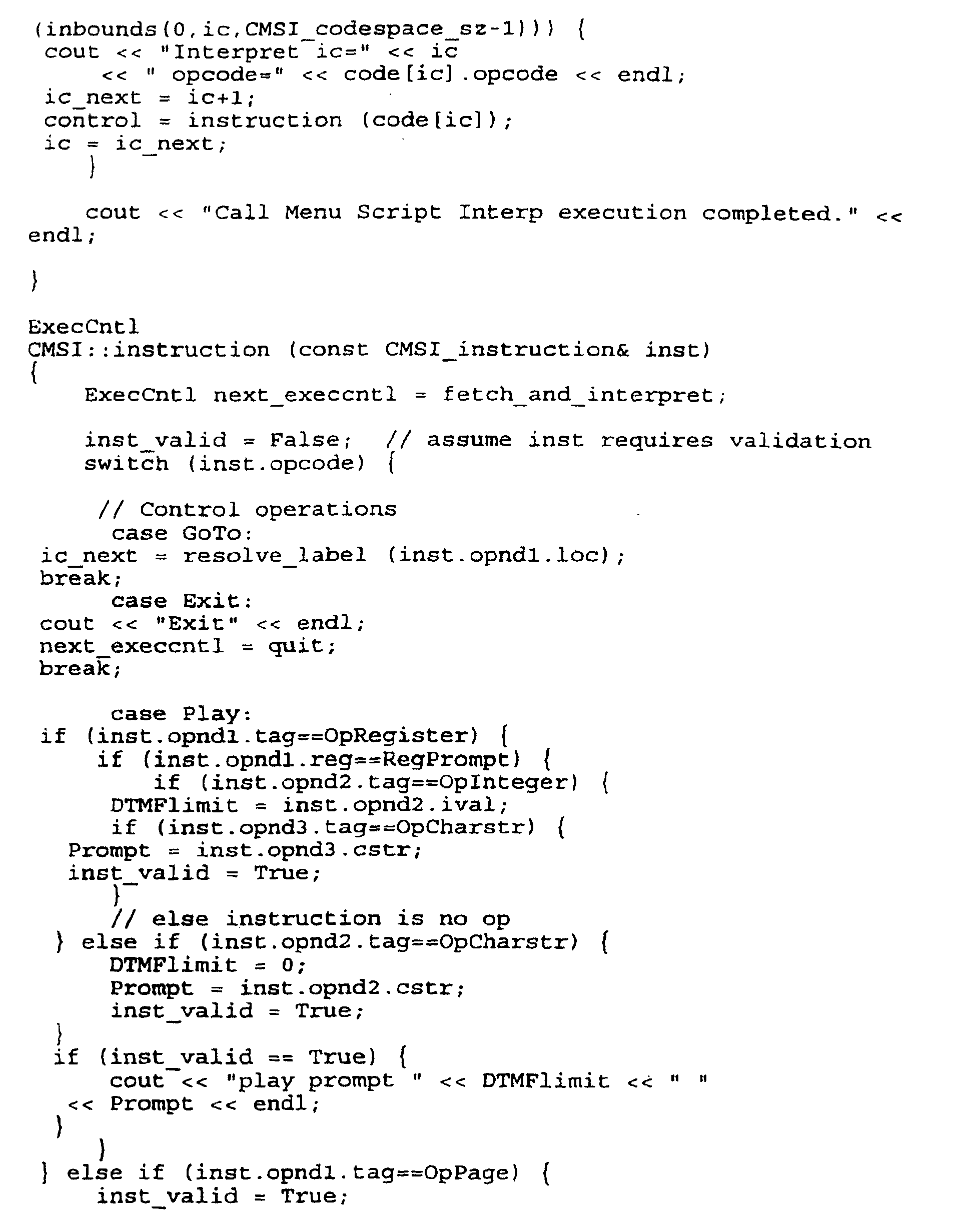

### Appendix D - Page 6

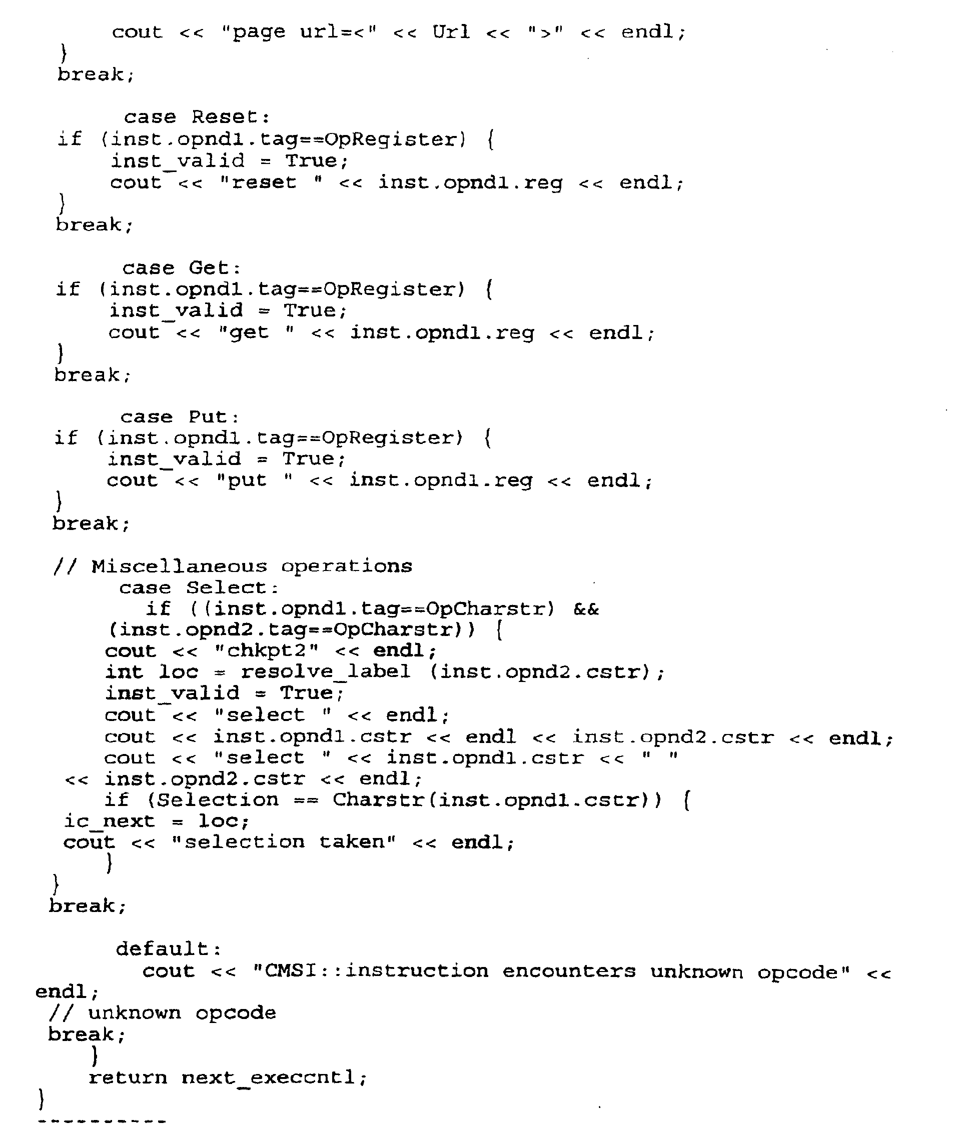

### Appendix D - Page 7

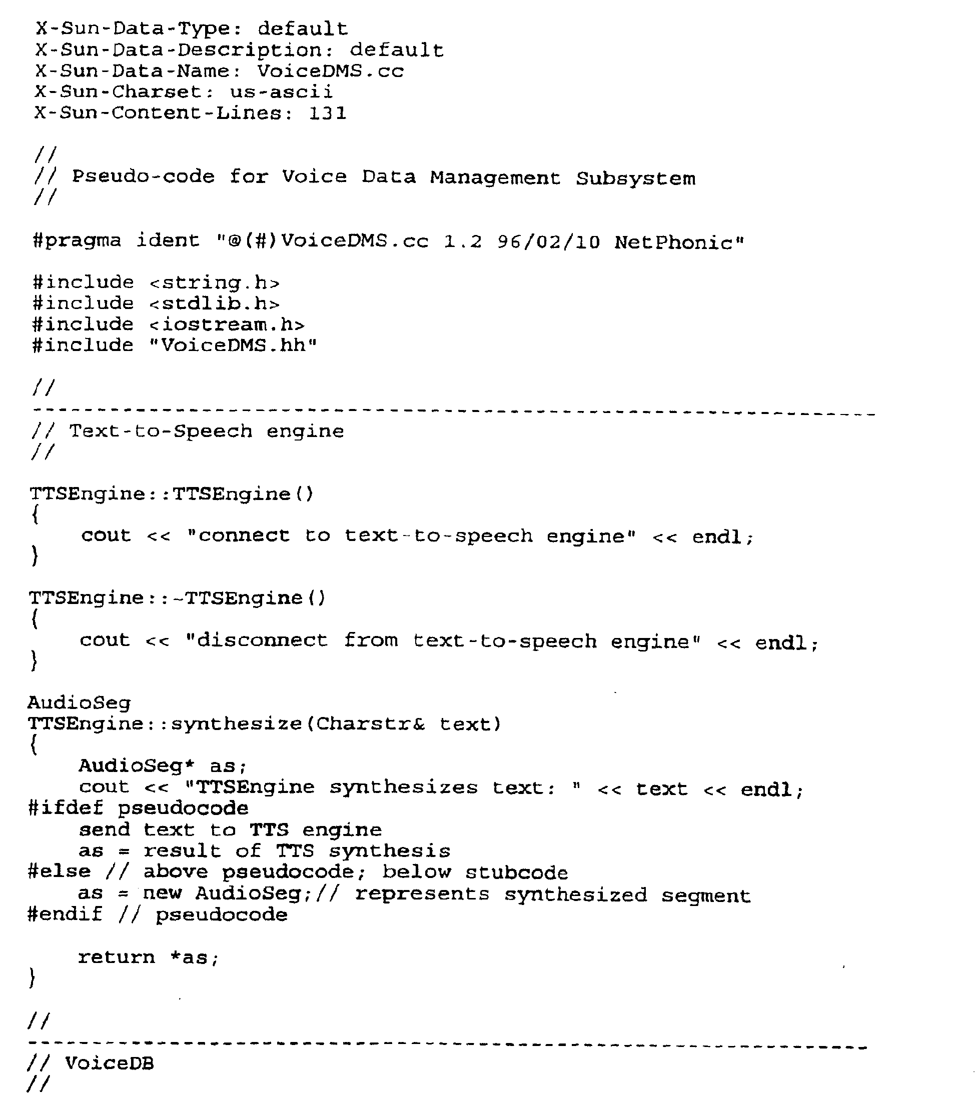

### Appendix D - Page 8

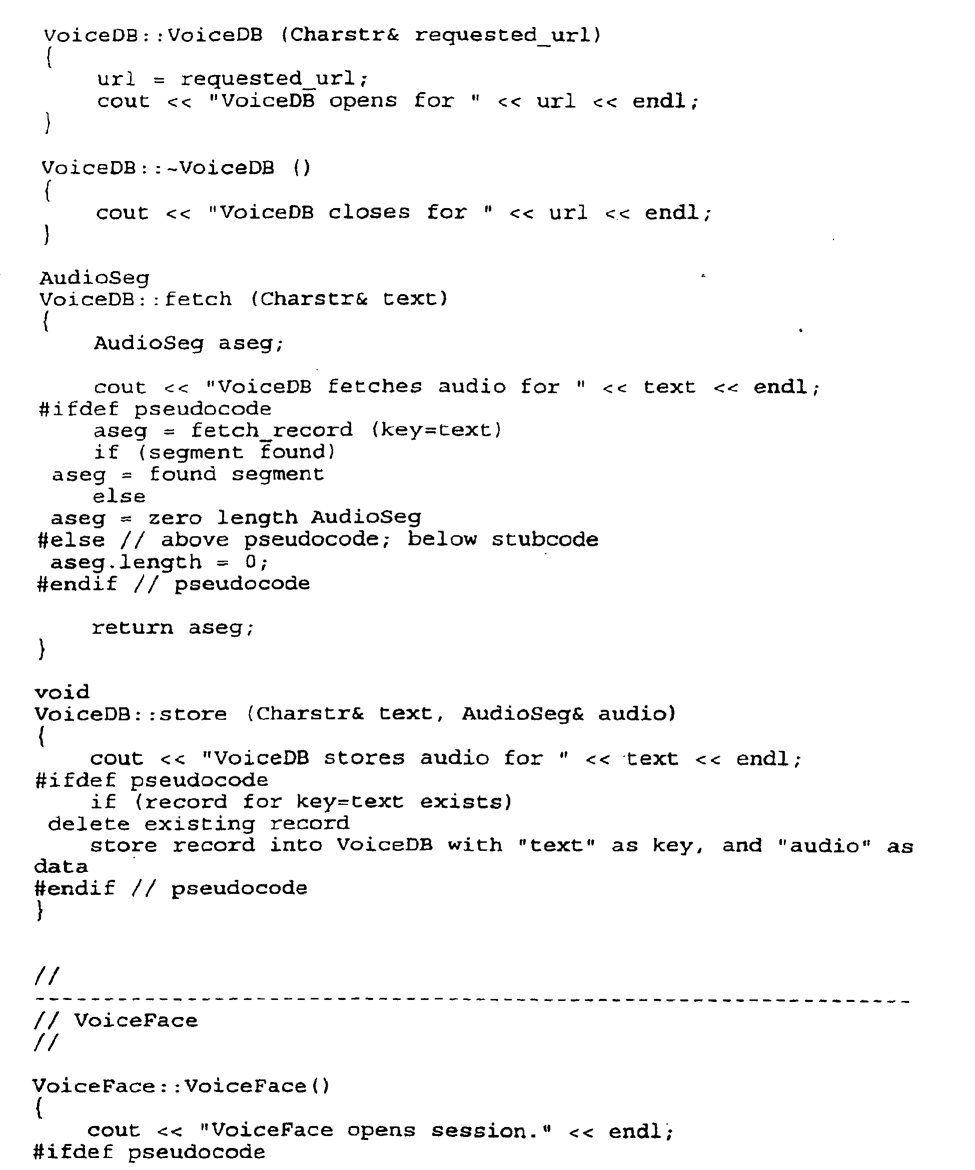

### Appendix D - Page 9

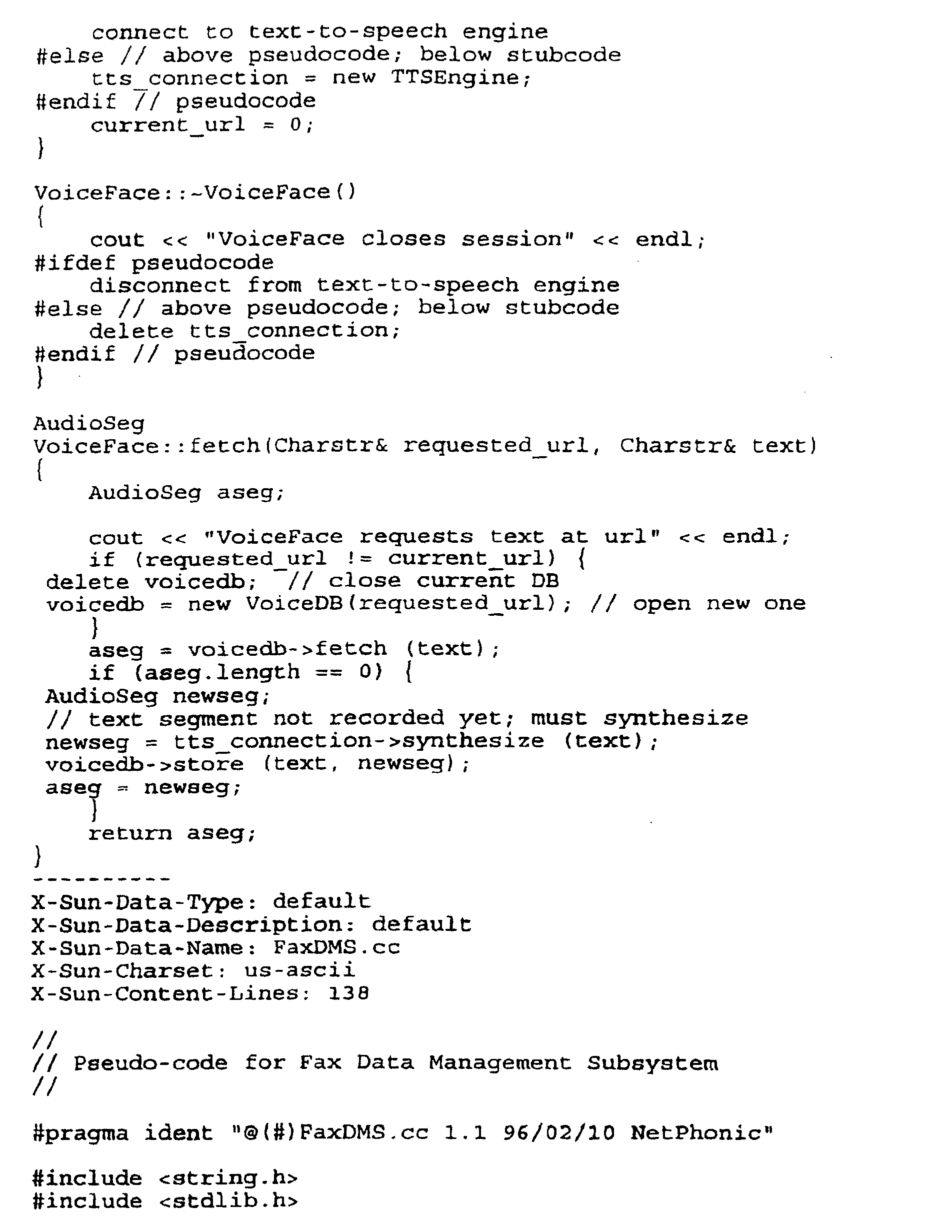

### Appendix D - Page 10

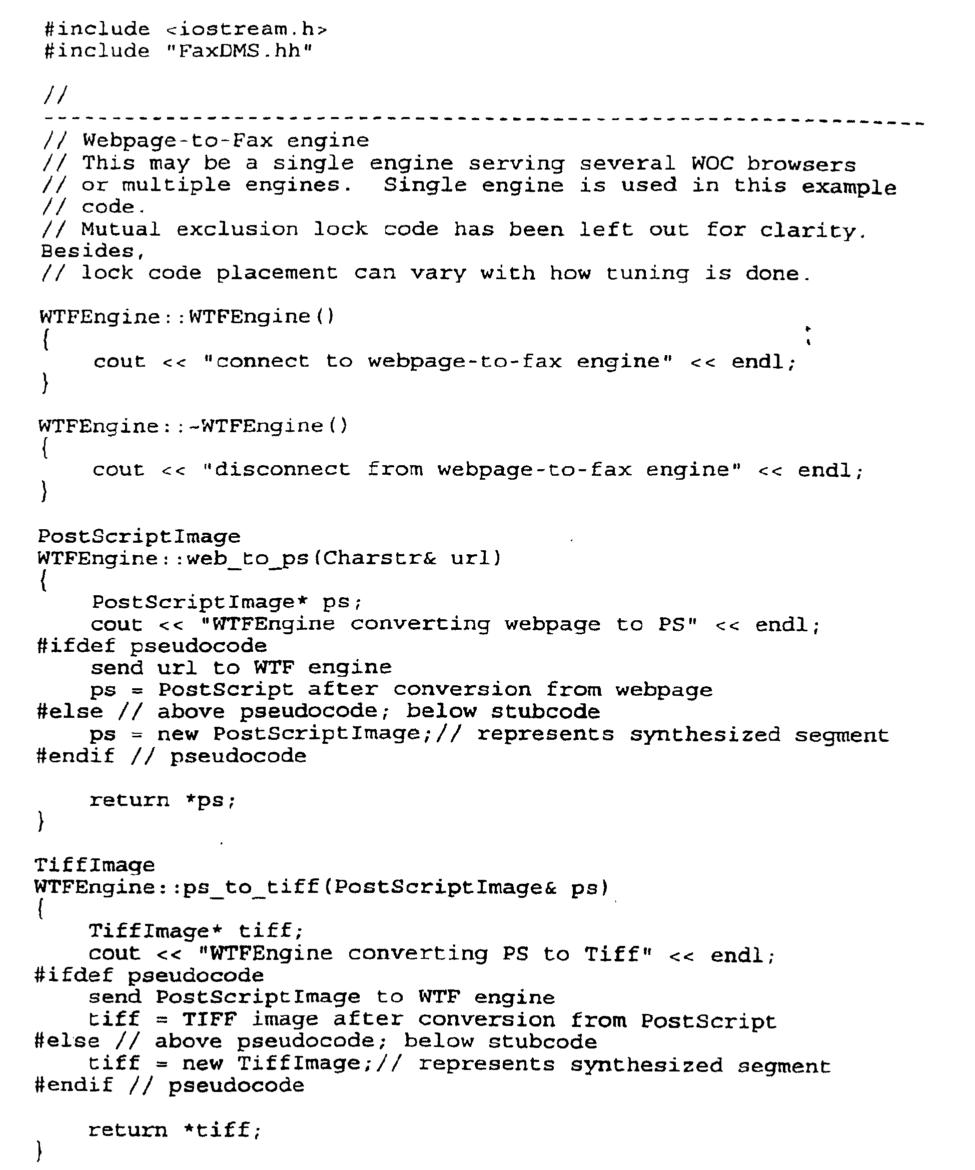

### Appendix D - Page 11

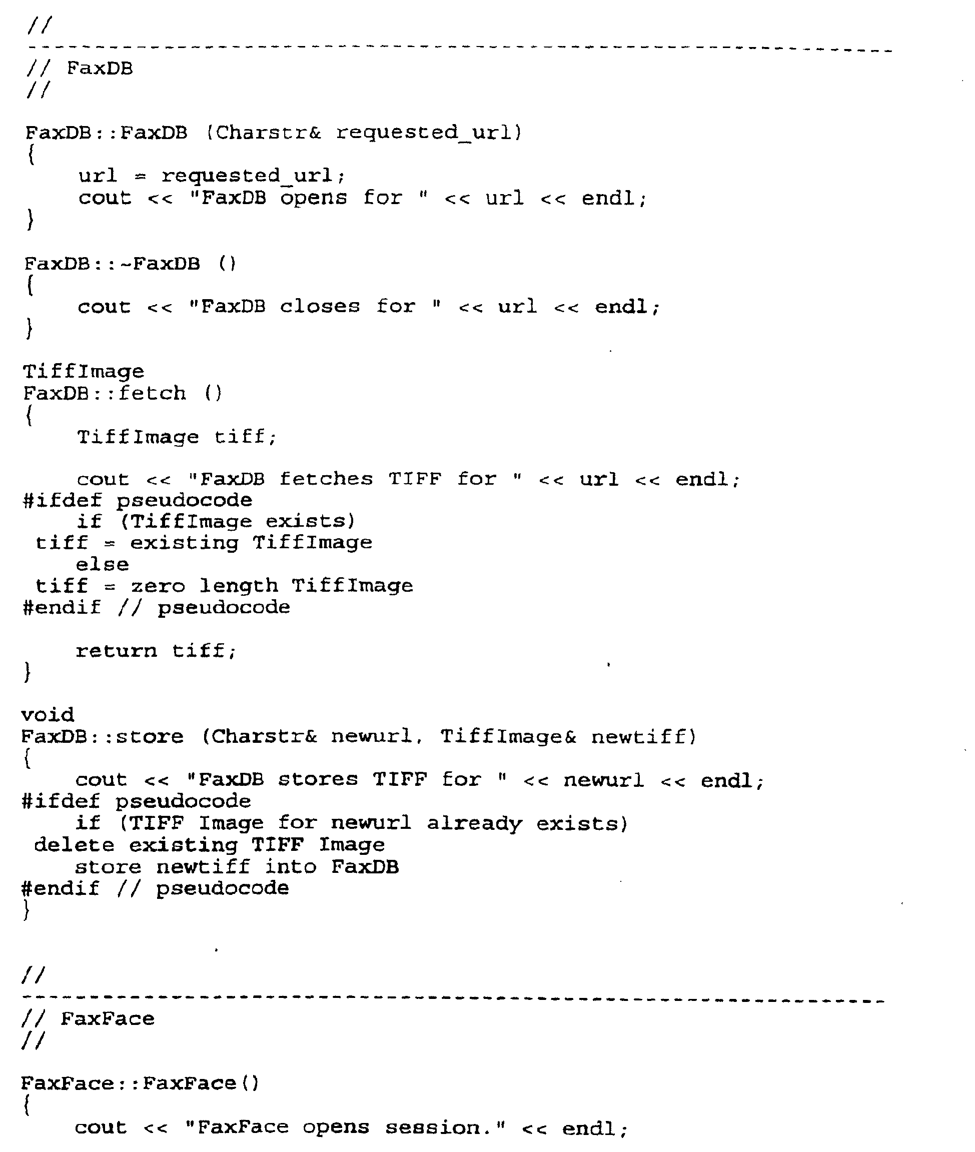

### Appendix D - Page 12

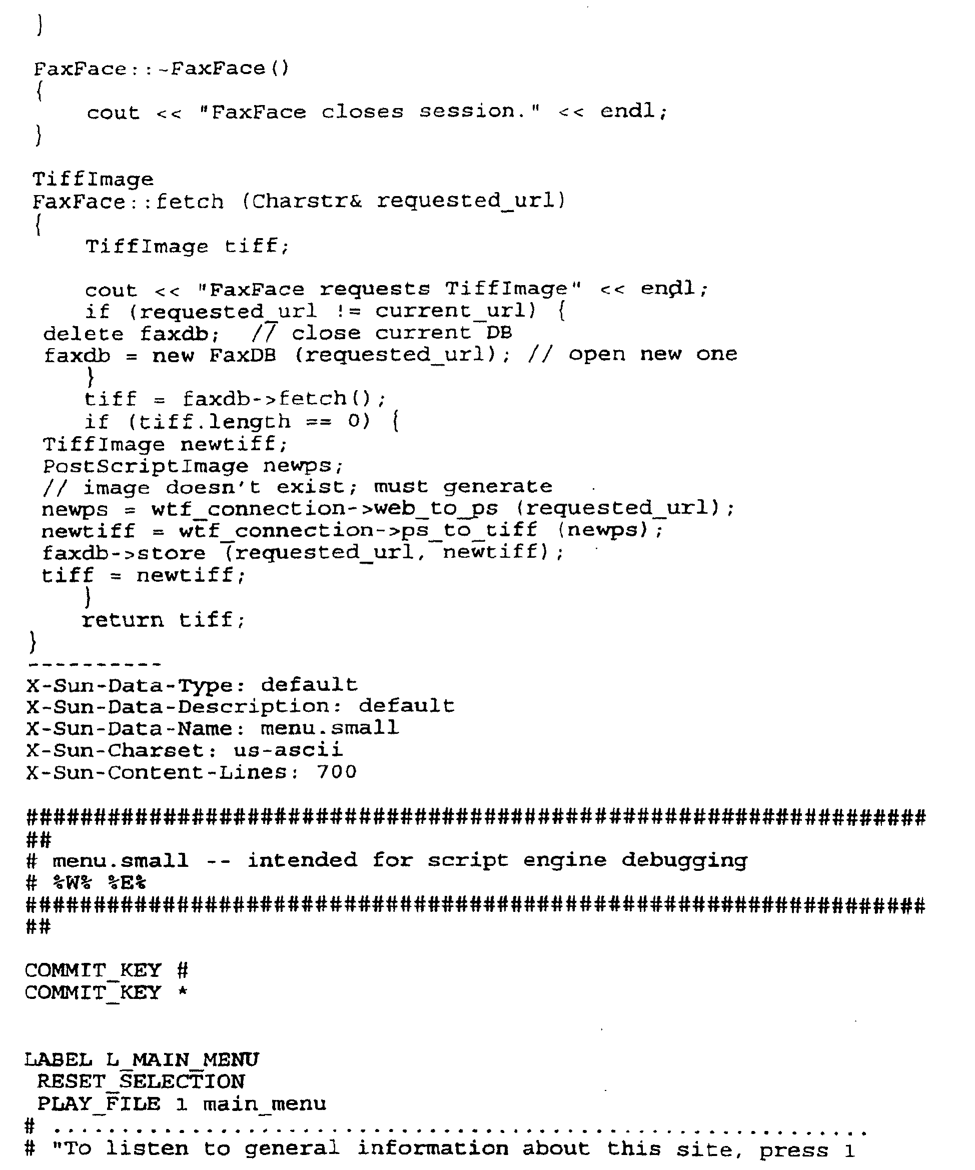

### Appendix D - Page 13

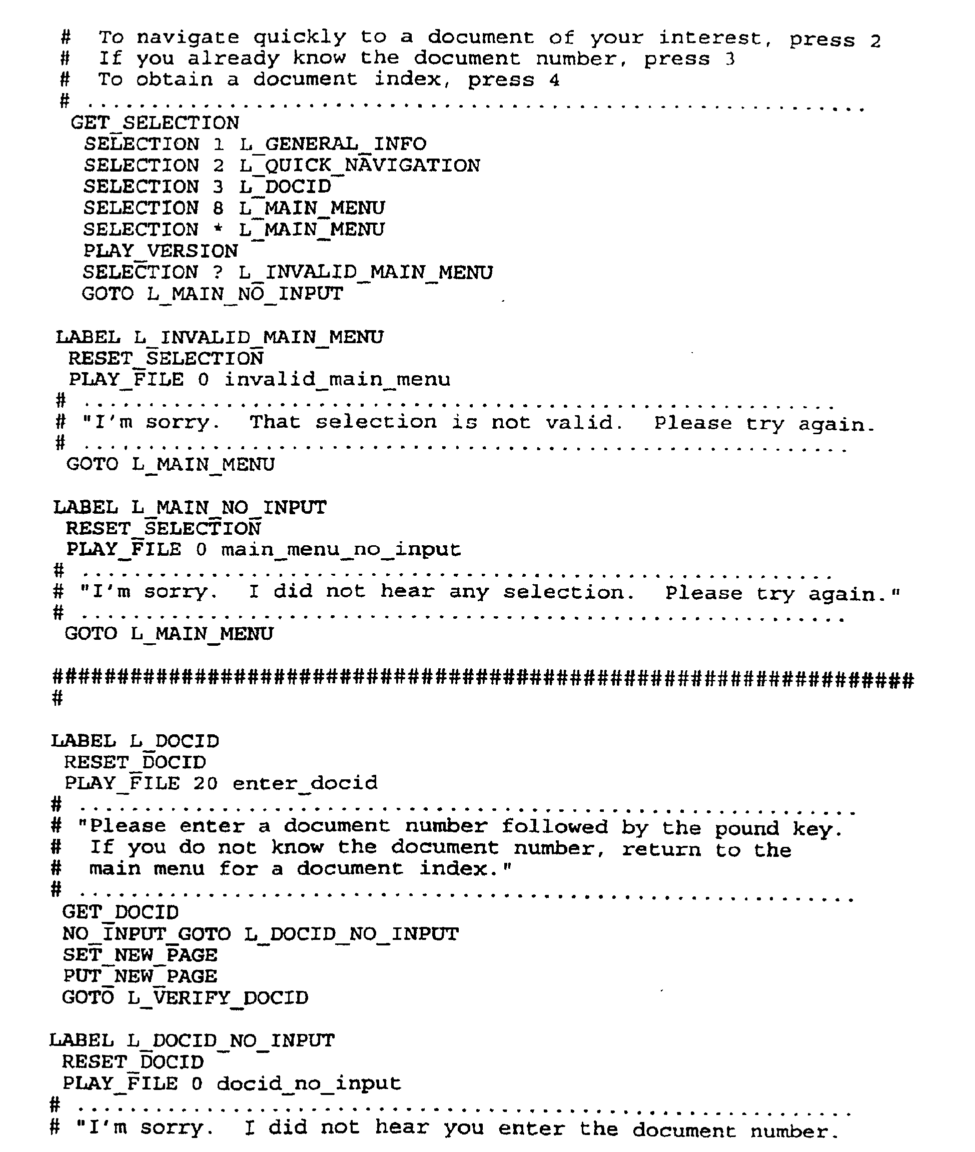

### Appendix D - Page 14

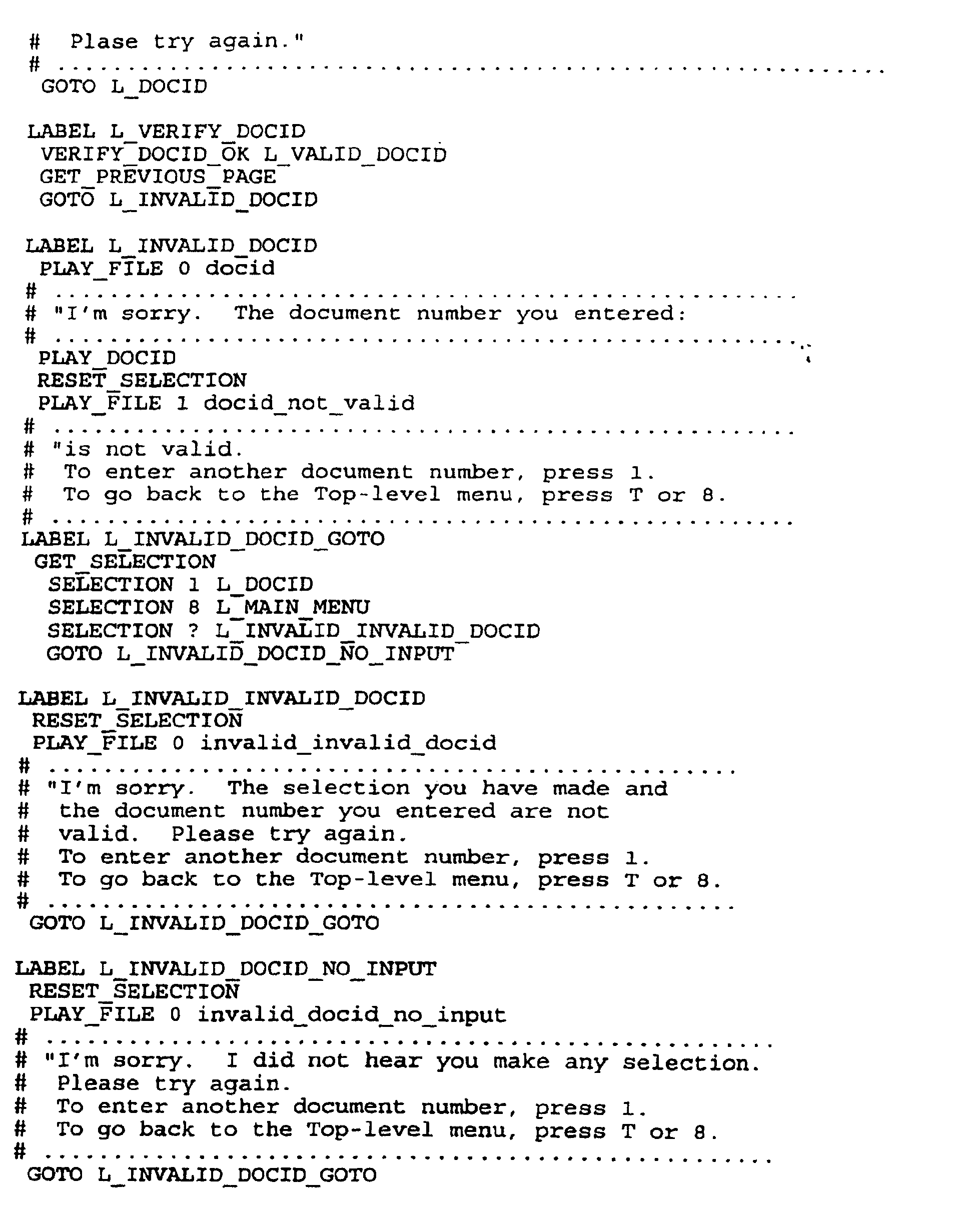

### Appendix D - Page 15

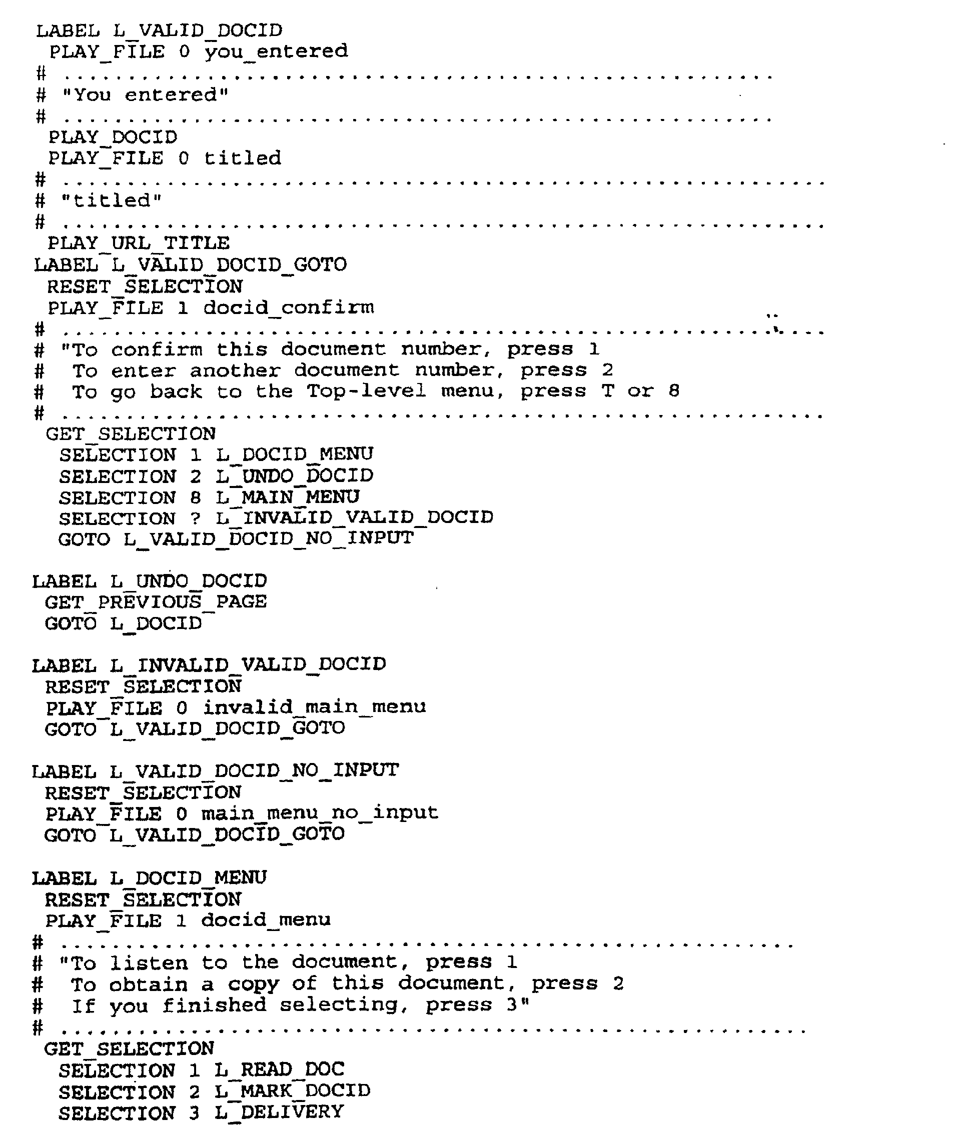

### Appendix D - Page 16

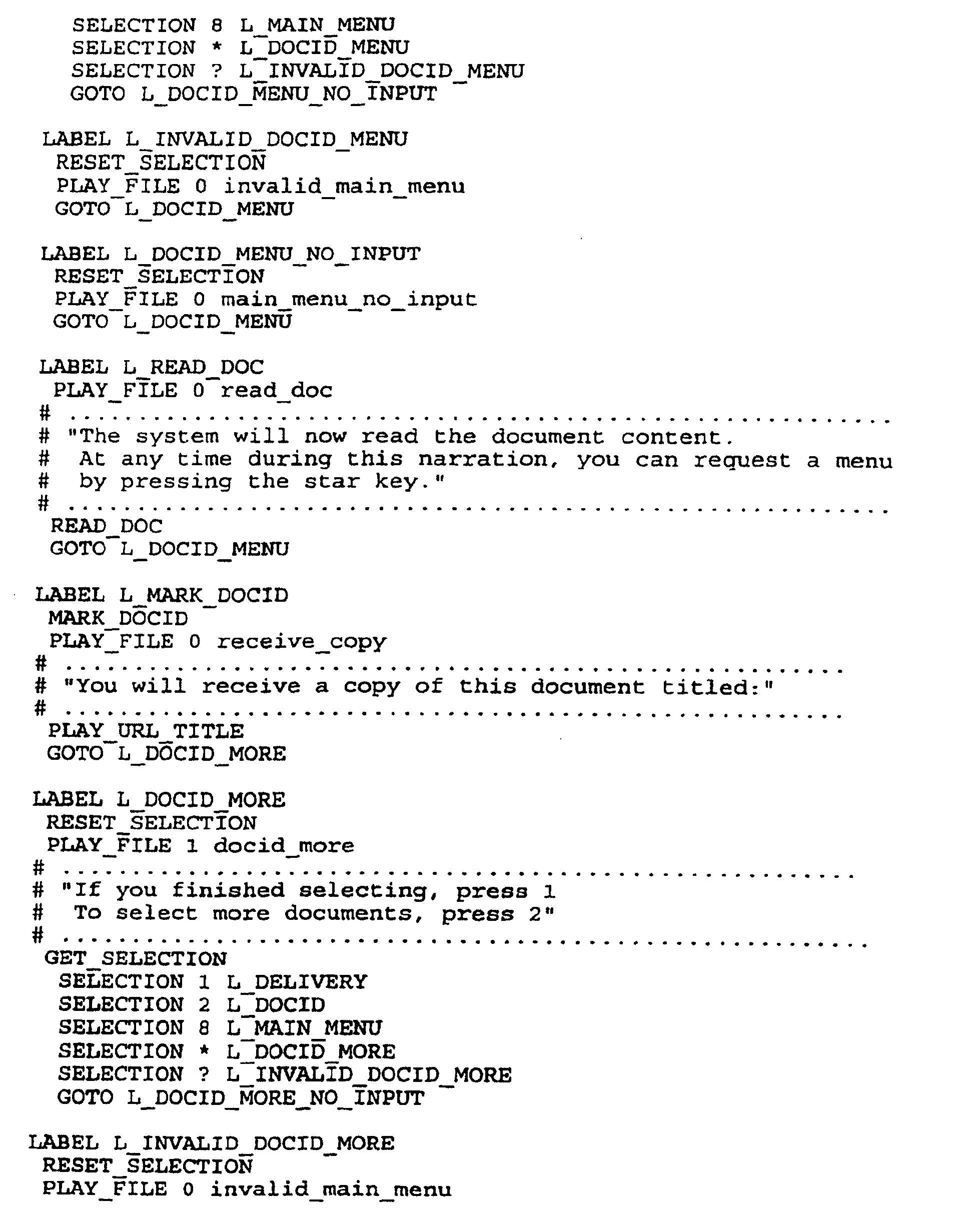

### Appendix D - Page 17

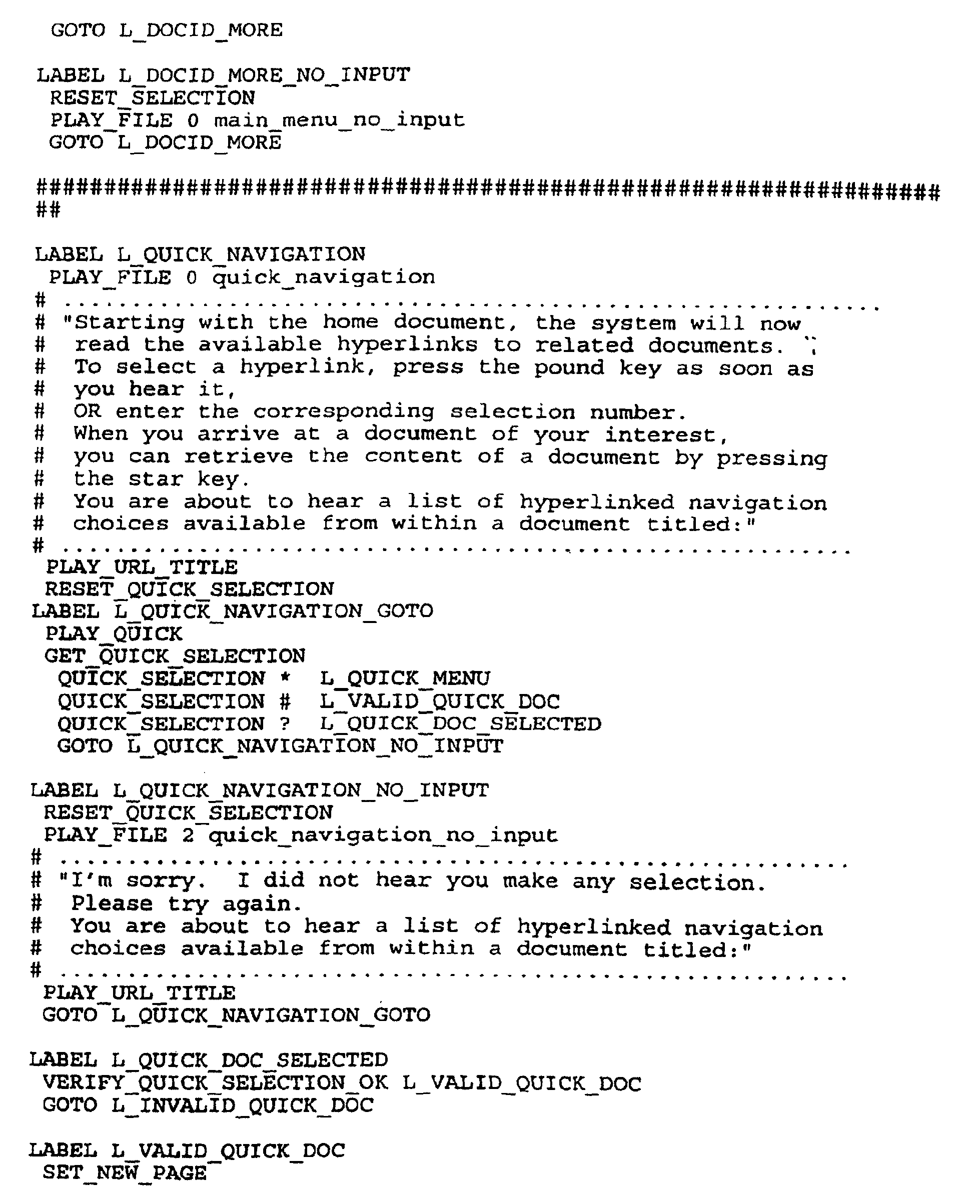

### Appendix D - Page 18

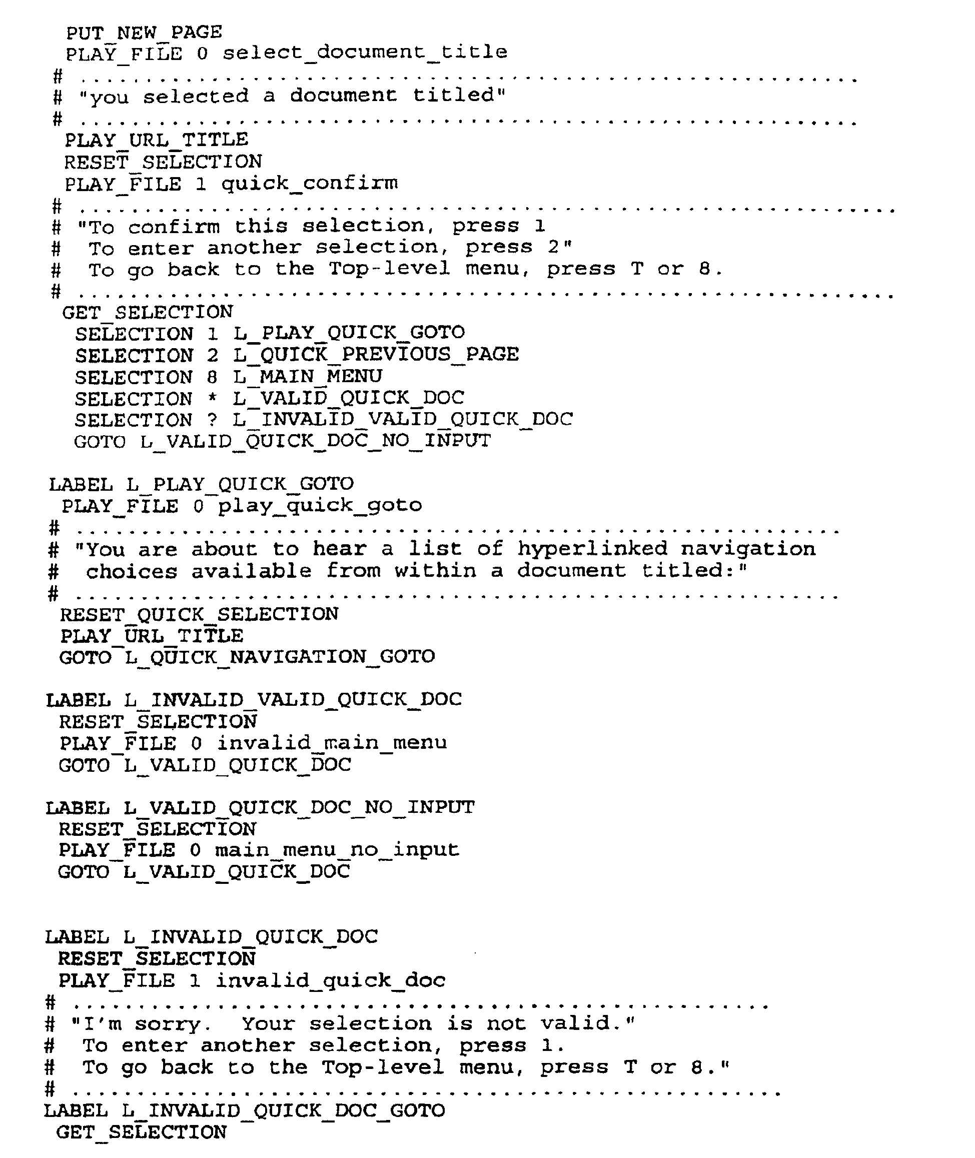

### Appendix D - Page 19

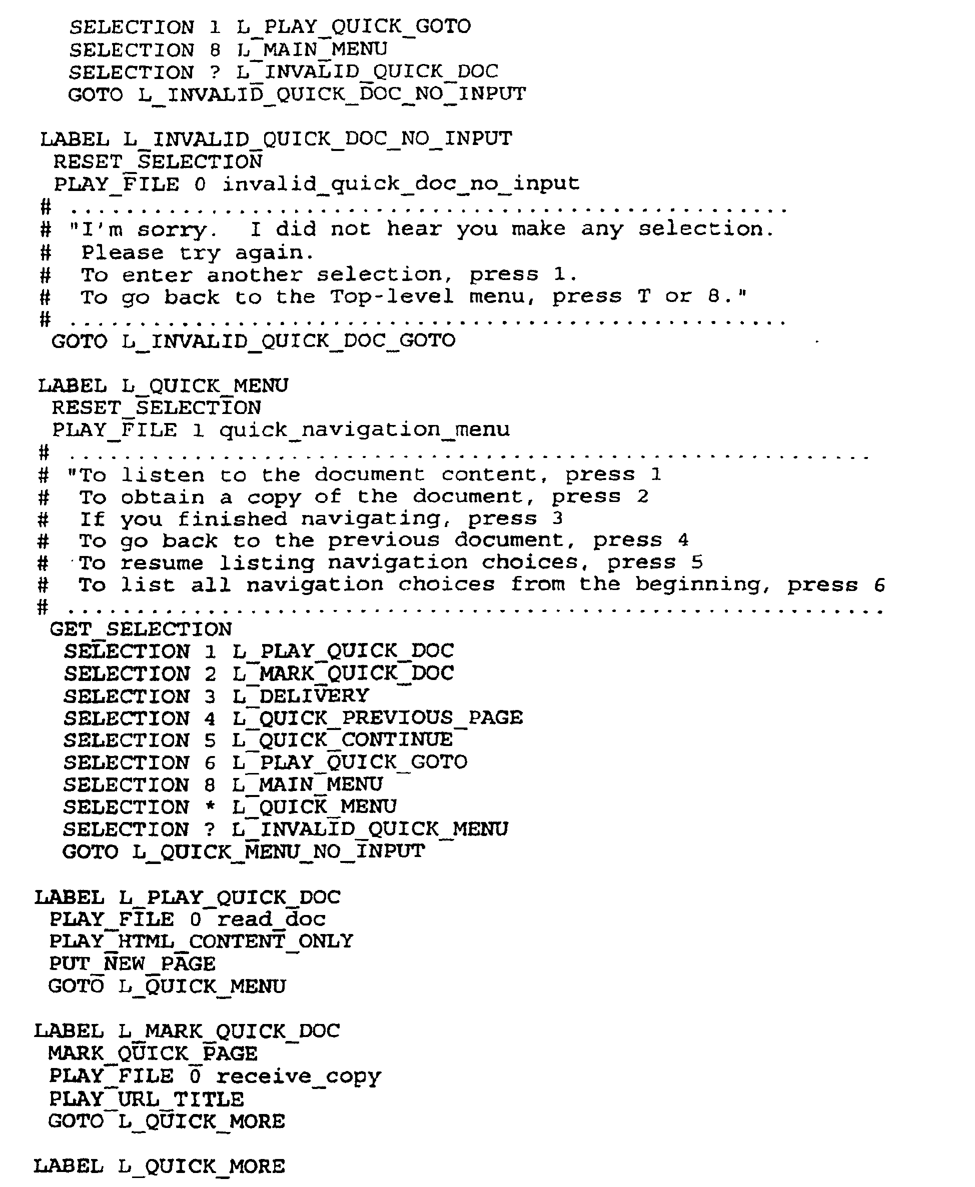

### Appendix D - Page 20

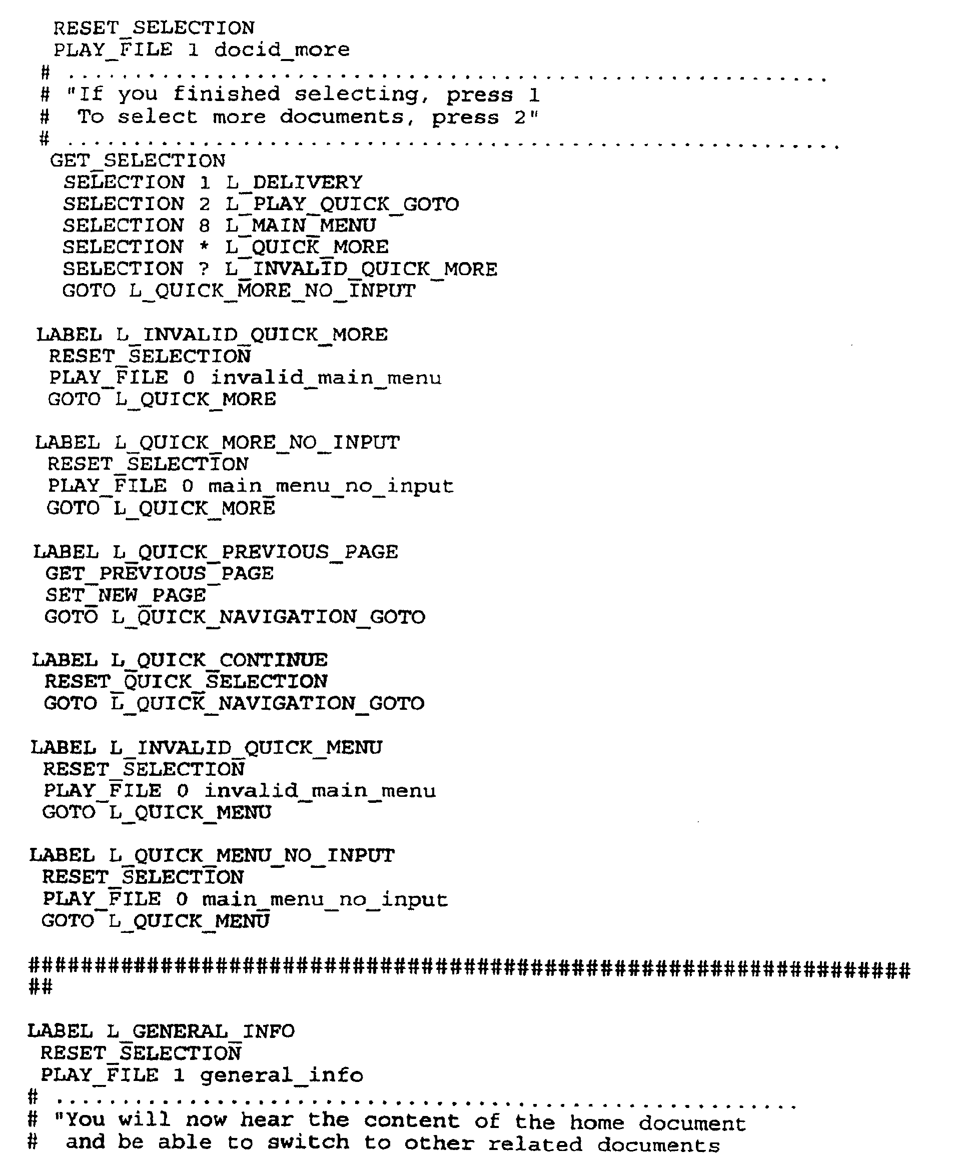

### Appendix D - Page 21

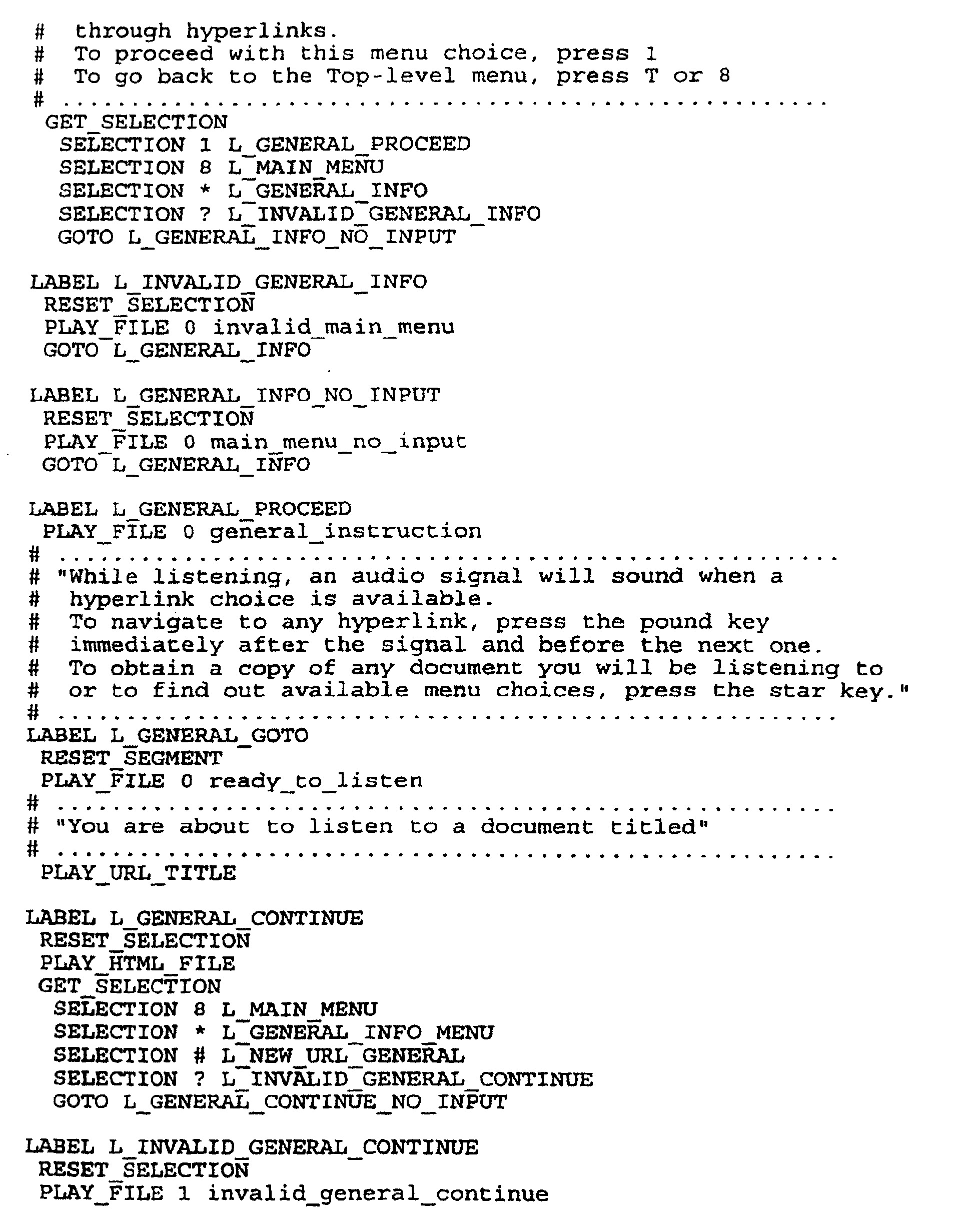

### Appendix D - Page 22

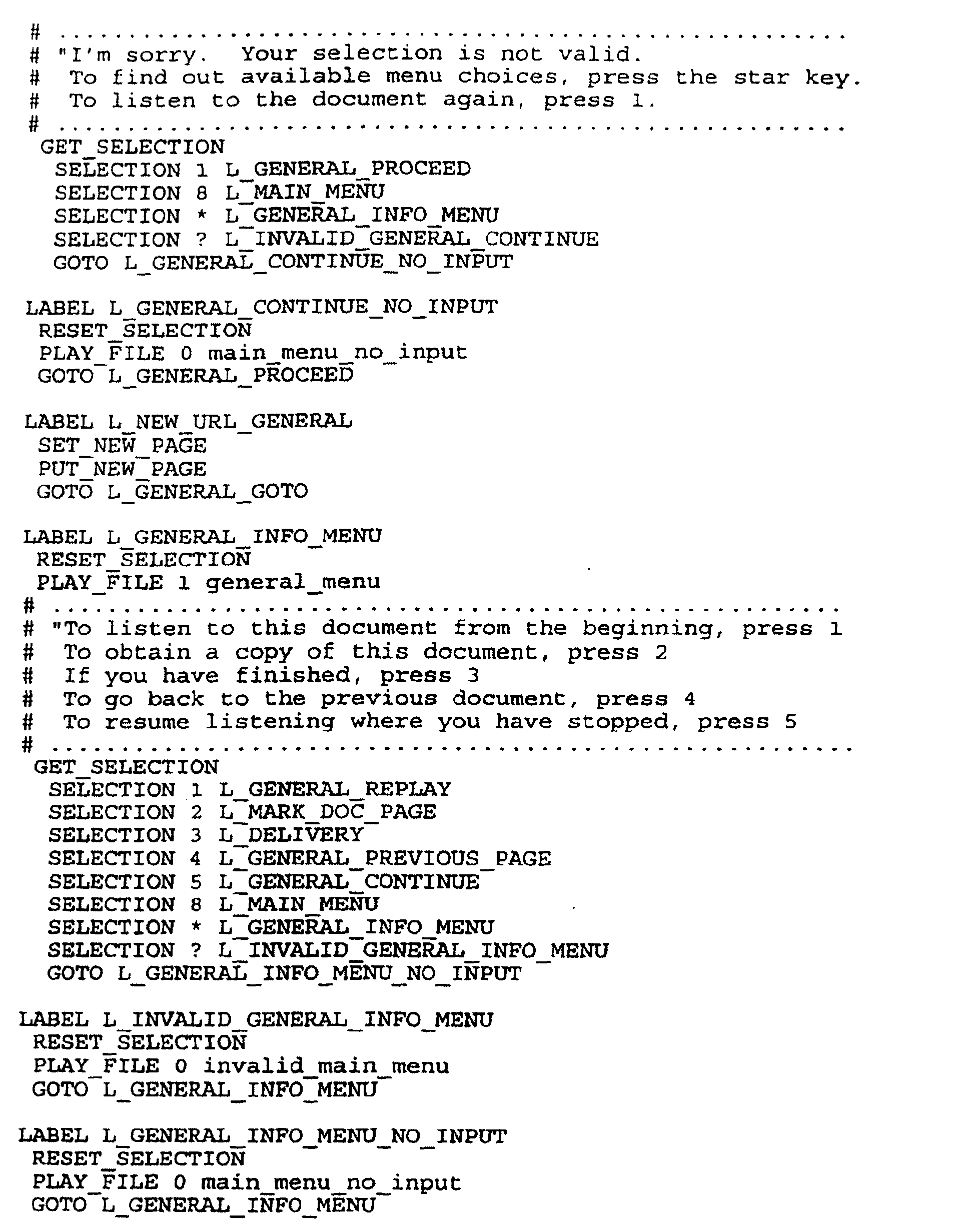

### Appendix D - Page 23

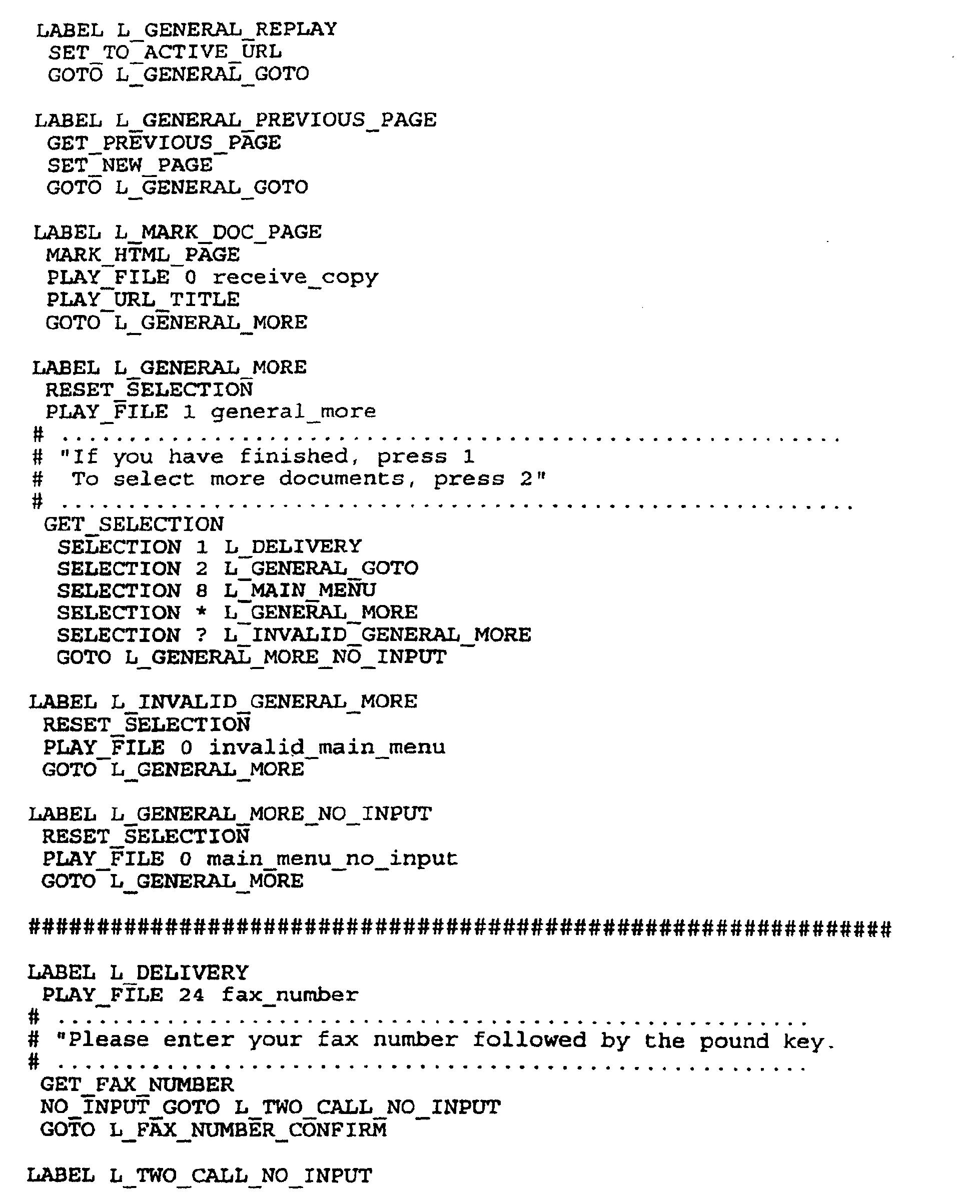

### Appendix D - Page 24

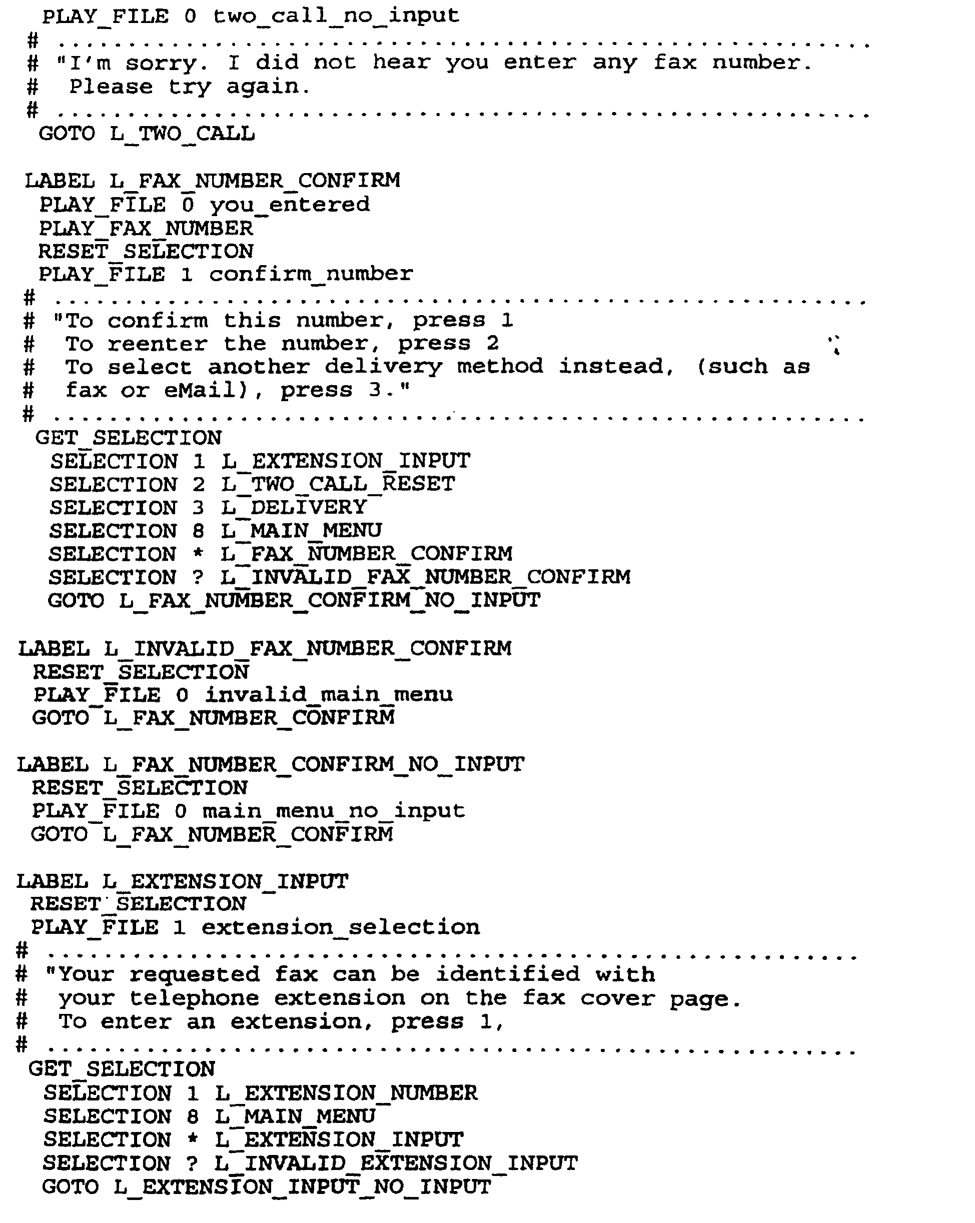

### Appendix D - Page 25

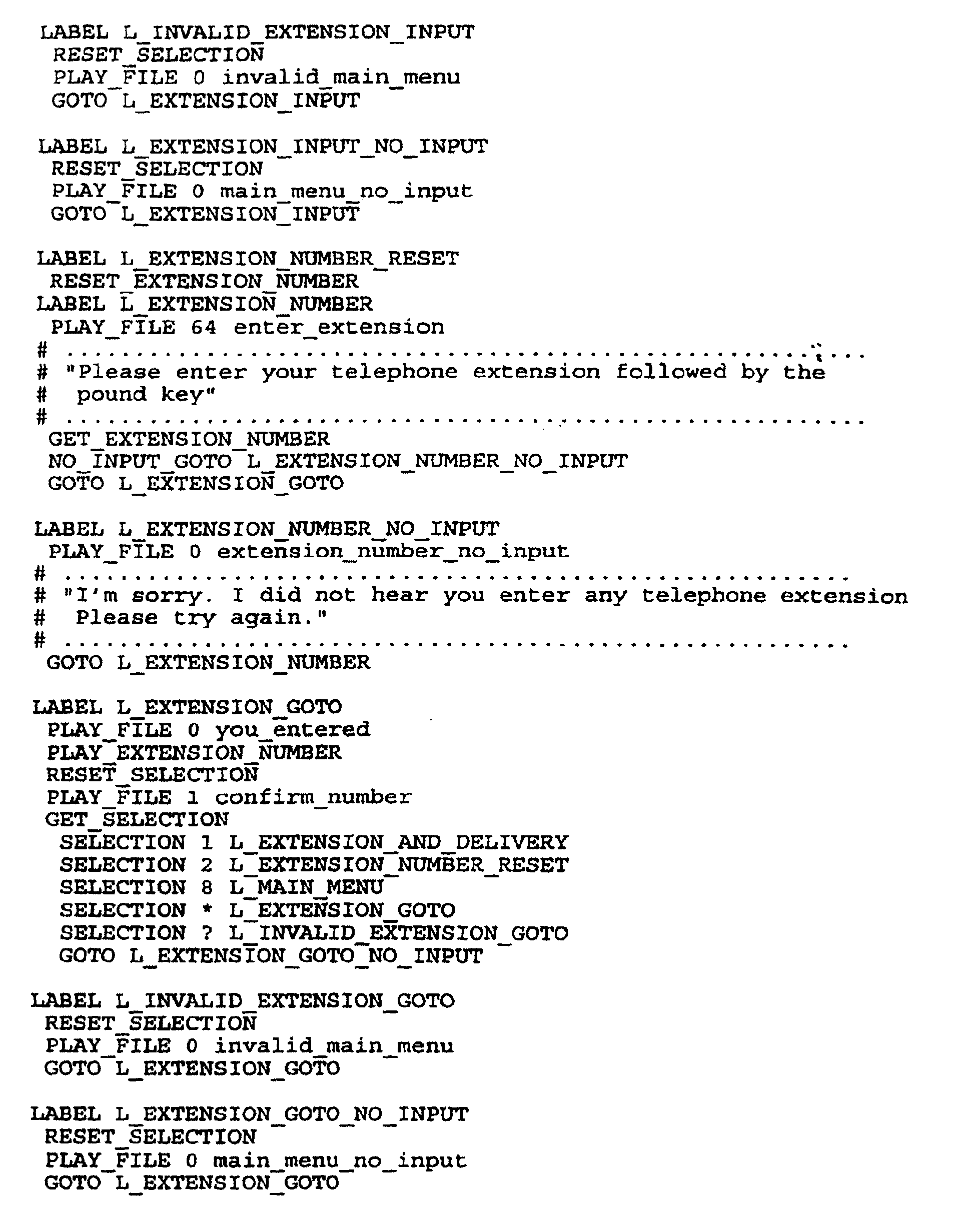

### Appendix D - Page 26

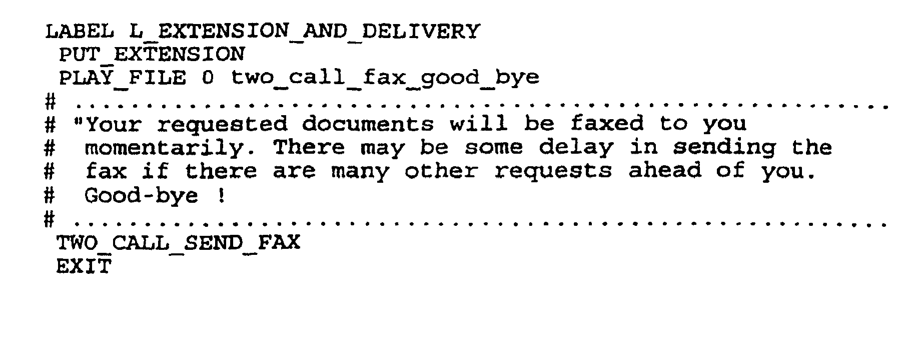

Appendix D - Page 27

## Claims

1. A method for telephonically accessing and retrieving information from an interconnected network of computers, comprising the steps of:
receiving a request, transmitted from a telephone, for accessing and retrieving information from an interconnected network of computers, the request comprising a signal corresponding to a first address corresponding to a first data file, accessible in said interconnected network of computers;
fetching said first data file corresponding to said first address, wherein the fetched data file is in a first format and includes at least one selectable element associated with a second address of a second data file;
converting said first data file in said first format to a voice format;
delivering to the telephone said fetched first data file in said voice format; and
delivering to the telephone an audio signal for signaling said at least one selectable element during said delivery of said first data file.

2. A method as recited in claim 1 wherein the at least one selectable element includes a hyperlink text corresponding to said second address of said second data file and one or more text segments each comprising a number of words, said converting step includes the substeps of:
reading said hyperlink texts and said one or more text segments;
upon reading a hyperlink text, providing the audio signal identifying the occurrence of said hyperlink text; and
upon reading a text segment, placing the words in the text segment in a data structure and providing an audio voice representing one or more of the words in said data structure, said data structure allowing playing back of said words in said voice format.

3. A method as recited in claim 1 wherein said first format is a Hyper Text Mark-up Language.

4. A method as recited in claim 1 wherein said voice format is a speech voice signal.

5. A method as recited in claim 1 wherein said delivering to the telephone said first data file step is carried out via a communication line.

6. A method as recited in claim 4 wherein said voice signal is English speech.

7. A method as recited in claim 4 wherein said voice signal is Spanish speech.

8. A method as recited in claim further comprising:
delivering to the telephone in voice format, information of one or more addresses corresponding to one or more data files accessible in said interconnected network of computers;
wherein said information includes the title for each of the one or more addresses and a second audio signal signifying that an address is available for accessing a data file corresponding to the address.

9. A method as recited in claim 8 wherein said second audio signal is a single recorded signal.

10. A method as recited in claim 8 wherein said second audio signal is a voice message.

11. A method as recited in claim 8 wherein said second audio signal is a numeric voice message.

12. A method as recited in claim 2 wherein said provided audio voice is retrieved from a voice signal database.

13. A method as recited in claim 2 wherein said provided audio voice is generated from the words read from said first data file.

14. A system for telephonically accessing and retrieving information from an interconnected network of computers (20), comprising:
means (14) for receiving a request, transmitted from a telephone, for accessing and retrieving information from an interconnected network of computers, the request comprising a signal corresponding to a first address of a first data files accessible in said interconnected network of computers,
means (28) for fetching said first data file corresponding to said first address wherein the first data file is in a first format and includes at least one selectable element associated with a second address of a second data file;
means (38) for converting said first data file in said first format to a voice format; and
means (26) for delivering to a telephone said first data file in said voice audio format and an audio signal for signaling said at least one selectable element during said delivery of said first data file.

15. A system as recited in claim 14 wherein at least one selectable element includes a hyperlink text corresponding to said second address of said second data file and one or more text segments each comprising a number of words, said converting means includes:
means for reading said hyperlink text and said one or more text segments;
means for providing the audio signal identifying the occurrence of said hyperlink text; and
means for placing the words in the text segment in a data structure and providing an audio voice representing one or more of the words in said data structure upon reading a text segment, said data structure allowing playing back of said words in said second format.

16. A system as recited in claim 14 wherein said first format is a Hyper Text Mark-up Language.

17. A system as recited in claim 14 wherein said voice format is a speech voice signal.

18. A system as recited in claim 14 wherein said delivering means uses a communication line.

## Patentansprüche

1. Verfahren zum telefonischen Zugreifen auf und Wiedergewinnen von Informationen in einem Computerverbundnetz, das die folgenden Schritte umfasst:
Empfangen einer von einem Telefon gesendeten Anforderung zum Zugreifen auf und Wiedergewinnen von Informationen von einem Computerverbundnetz, wobei die Anforderung ein Signal enthält, das einer ersten Adresse entspricht, die einer ersten Datendatei entspricht, auf die in dem Computerverbundnetz zugegriffen werden kann;
Holen der ersten Datendatei, die der ersten Adresse entspricht, wobei die geholte Datendatei in einem ersten Format vorliegt und wenigstens ein auswählbares Element enthält, das einer zweiten Adresse einer zweiten Datendatei zugeordnet ist;
Umsetzen der ersten Datendatei in dem ersten Format in ein Sprachformat;
Liefern der geholten ersten Datendatei in dem Sprachformat an das Telephon; und
Liefern eines Audiosignals zum Melden des wenigstens einen auswählbaren Elements während der Lieferung der ersten Datendatei zu dem Telephon.

2. Verfahren nach Anspruch 1, wobei das wenigstens eine auswählbare Element einen Hyperlink-Text, der der zweiten Adresse der zweiten Datendatei entspricht, und ein oder mehrere Textsegmente enthält, wovon jedes eine Anzahl von Wörtern enthält, wobei der Umsetzungsschritt die folgenden Unterschritte umfasst:
Lesen der Hyperlink-Texte und des einen oder der mehreren Textsegmente;
beim Lesen eines Hyperlink-Texts Bereitstellen des Audiosignals, das das Auftreten des Hyperlink-Texts identifiziert; und
beim Lesen eines Textsegments Anordnen der Wörter in dem Textsegment in einer Datenstruktur und Bereitstellen von Audiosprache, die eines oder mehrere der Wörter in der Datenstruktur repräsentiert, wobei die Datenstruktur die Wiedergabe der Wörter in dem Sprachformat ermöglicht.

3. Verfahren nach Anspruch 1, wobei das erste Format eine Hyper Text Mark-up Language ist.

4. Verfahren nach Anspruch 1, wobei das Sprachformat ein Stimmsprachsignal ist.

5. Verfahren nach Anspruch 1, wobei der Schritt des Lieferns der ersten Datendatei zu dem Telephon über eine Kommunikationsleitung ausgeführt wird.

6. Verfahren nach Anspruch 4, wobei das Sprachsignal englische Sprache ist.

7. Verfahren nach Anspruch 4, wobei das Sprachsignal spanische Sprache ist.

8. Verfahren nach Anspruch 1, das ferner umfasst:
Liefern von Informationen bezüglich einer oder mehrerer Adressen, die einer oder mehreren Datendateien entsprechen, auf die in dem Computerverbundnetz zugegriffen werden kann, im Sprachformat an das Telephon;
wobei die Informationen den Titel für jede der einen oder der mehreren Adressen und ein zweites Audiosignal, das meldet, dass eine Adresse für den Zugriff auf eine der Adresse entsprechende Datendatei verfügbar ist, meldet, umfassen.

9. Verfahren nach Anspruch 8, wobei das zweite Audiosignal ein einzelnes aufgezeichnetes Signal ist.

10. Verfahren nach Anspruch 8, wobei das zweite Audiosignal eine Sprachnachricht ist.

11. Verfahren nach Anspruch 8, wobei das zweite Audiosignal eine numerische Sprachnachricht ist.

12. Verfahren nach Anspruch 2, wobei die bereitgestellte Audiosprache aus einer Sprachsignal-Datenbank wiedergewonnen wird.

13. Verfahren nach Anspruch 2, wobei die bereitgestellte Audiosprache aus den Wörtern erzeugt wird, die aus der ersten Datendatei gelesen werden.

14. System zum telephonischen Zugreifen auf und Wiedergewinnen von Informationen in einem Computerverbundnetz (20), das umfasst:
Mittel (14), um eine von einem Telephon gesendete Anforderung zum Zugreifen auf und Wiedergewinnen von Informationen in einem Computerverbundnetz zu empfangen, wobei die Anforderung ein Signal enthält, das einer ersten Adresse einer ersten Datendatei entspricht, auf die in dem Computerverbundnetz zugegriffen werden kann,
Mittel (28), um die erste Datendatei, die der ersten Adresse entspricht, zu holen, wobei die erste Datendatei in einem ersten Format vorliegt und wenigstens ein auswählbares Element enthält, das einer zweiten Adresse einer zweiten Datendatei zugeordnet ist;
Mittel (38), um die erste Datendatei in dem ersten Format in ein Sprachformat umzusetzen; und
Mittel (26), um die erste Datendatei in dem Sprach-Audioformat und ein Audiosignal, um das wenigstens eine auswählbare Element während der Lieferung der ersten Datendatei zu melden, an ein Telephon zu liefern.

15. System nach Anspruch 14, wobei wenigstens ein auswählbares Element einen Hyperlink-Text, der der zweiten Adresse der zweiten Datendatei entspricht, und ein oder mehrere Textsegmente, wovon jedes eine Anzahl von Wörtern umfasst, enthält, wobei die Umsetzungsmittel umfassen:
Mittel, um den Hyperlink-Text und das eine oder die mehreren Textsegmente zu lesen;
Mittel, um das Audiosignal bereitzustellen, das das Auftreten des Hyperlink-Texts identifiziert; und
Mittel, um die Wörter in dem Textsegment in einer Datenstruktur anzuordnen und um eine Audiosprache, die eines oder mehrere der Wörter in der Datenstruktur repräsentiert, beim Lesen eines Textsegments bereitzustellen, wobei die Datenstruktur die Wiedergabe der Wörter in dem zweiten Format ermöglicht.

16. System nach Anspruch 14, wobei das erste Format eine Hyper Text Mark-up Language ist.

17. System nach Anspruch 14, wobei das Sprachformat ein Stimmsprachsignal ist.

18. System nach Anspruch 14, wobei die Liefermittel eine Kommunikationsleitung verwenden.

## Revendications

1. Procédé pour accéder à et récupérer par téléphone des informations à partir d'un réseau d'ordinateurs interconnectés, comprenant les étapes de :
réception d'une demande, transmise à partir d'un téléphone, pour accéder à et récupérer des informations à partir d'un réseau d'ordinateurs interconnectés, la demande comprenant un signal correspondant à une première adresse correspondant à un premier fichier de données, accessible dans ledit réseau d'ordinateurs interconnectés ;
rapport dudit premier fichier de données correspondant à ladite première adresse, où le fichier de données rapporté est dans un premier format et comprend au moins un élément sélectionnable associé à une seconde adresse d'un second fichier de données ;
conversion dudit premier fichier de données dans ledit premier format en un format vocal ;
fourniture au téléphone dudit premier fichier de données rapporté dans ledit format vocal ; et
fourniture au téléphone d'un signal audio pour signaler ledit au moins un élément sélectionnable pendant ladite fourniture dudit premier fichier de données.

2. Procédé selon la revendication 1, dans lequel au moins un élément sélectionnable comprend un texte d'hyperlien correspondant à ladite seconde adresse dudit second fichier de données et un ou plusieurs segments de texte comprenant chacun un nombre de mots, ladite étape de conversion comprend les sous-étapes de :
lecture desdits textes d'hyperlien et desdits un ou plusieurs segments de texte ;
lors de la lecture d'un texte d'hyperlien, fourniture du signal audio identifiant l'occurrence dudit texte d'hyperlien ; et
lors de la lecture d'un segment de texte, placement de mots dans le segment de texte dans une structure de données et fourniture d'une voie audio représentant un ou plusieurs des mots dans ladite structure de données, ladite structure de données permettant une relecture desdits mots dans ledit format vocal.

3. Procédé selon la revendication 1, dans lequel ledit premier format est un langage de balise hypertexte.

4. Procédé selon la revendication 1, dans lequel ledit format vocal est un signal vocal de parole.

5. Procédé selon la revendication 1, dans lequel ladite fourniture au téléphone de ladite première étape de fichier de données est réalisée via une ligne de communication.

6. Procédé selon la revendication 4, dans lequel ledit signal vocal est une voix en anglais.

7. Procédé selon la revendication 4 dans lequel ledit signal vocal est une voie en espagnol.

8. Procédé selon la revendication 1, comprenant en outre :
la fourniture au téléphone dans un format vocal, des informations d'une ou plusieurs adresses correspondant à un ou plusieurs fichiers de données accessibles dans ledit réseau d'ordinateurs interconnectés ;
dans lequel lesdites informations comprennent le titre pour chacun d'une ou plusieurs adresses et d'un second signal audio signifiant qu'une adresse est disponible pour accéder à un fichier de données correspondant à l'adresse.

9. Procédé selon la revendication 8, dans lequel ledit second signal audio est un signal enregistré unique.

10. Procédé selon la revendication 8, dans lequel ledit second signal audio est un message vocal.

11. Procédé selon la revendication 8, dans lequel ledit second signal audio est un message vocal numérique.

12. Procédé selon la revendication 2, dans lequel ladite voix audio fournie est récupérée à partir d'une base de données de signal vocal.

13. Procédé selon la revendication 2, dans lequel ladite voix audio fournie est générée à partir de mots lus dudit premier fichier de données.

14. Système pour accéder à et récupérer par téléphone des informations à partir d'un réseau d'ordinateurs interconnectés (20), comprenant :
un moyen (14) pour recevoir une demande, transmise à partir d'un téléphone, pour accéder à et récupérer des informations à partir d'un réseau d'ordinateurs interconnectés, la demande comprenant un signal correspondant à une première adresse d'un premier fichier de données accessible dans ledit réseau d'ordinateurs interconnectés ;
un moyen (28) pour rapporter ledit premier fichier de données correspondant à ladite première adresse dans lequel le premier fichier de données est dans un premier format et comprend au moins un élément sélectionnable associé à une seconde adresse d'un second fichier de données ;
un moyen (38) pour convertir ledit premier fichier de données dans ledit premier format en un format vocal ; et
un moyen (26) pour délivrer à un téléphone ledit premier fichier de données dans ledit format audio vocal et un signal audio pour signaler ledit au moins un élément sélectionnable pendant ladite fourniture dudit premier fichier de données.

15. Système selon la revendication 14, dans lequel au moins un élément sélectionnable comprend un texte d'hyperlien correspondant à une seconde adresse dudit second fichier de données et un ou plusieurs segments de texte comprenant chacun un nombre de mots, ledit moyen de conversion comprend :
un moyen pour lire ledit texte d'hyperlien et lesdits un ou plusieurs segments de texte ;
un moyen pour fournir le signal audio identifiant l'ocurence dudit texte d'hyperlien ; et
un moyen pour placer les mots dans le segment de texte dans une structure de données et fournir une voie audio représentant un ou plusieurs des mots dans ladite structure de données lors de la lecture d'un segment de texte, ladite structure de données permettant une relecture desdits mots dans ledit second format.

16. Système selon la revendication 14, dans lequel ledit premier format est un langage de balise hypertexte.

17. Système selon la revendication 14, dans lequel ledit format vocal est un signal vocal de parole.

18. Système selon la revendication 14, dans lequel ledit moyen de fourniture utilise une ligne de communication.
